# EUROPEAN PATENT APPLICATION

(11) **EP 4 241 933 A1**
(43) Date of publication of application: **13.09.2023**
(21) Application number: 21888962.4
(22) Date of filing: 05.10.2021
(51) Int. Cl.: B25J 15/08

(54) **HAND, ROBOT, ROBOT SYSTEM, AND CONTROL METHOD FOR HAND**

(30) Priority: 04.11.2020 JP 2020184708
(71) Applicant: KAWASAKI JUKOGYO KABUSHIKI KAISHA, Kobe-shi, Hyogo 650-8670 (JP)
(72) Inventor: MURASE, Yohei, Chuo-ku, Kobe-shi, Hyogo 6508670 (JP); MATSUURA, Takeshi, Chuo-ku, Kobe-shi, Hyogo 6508670 (JP); ORYU, Tamami, Chuo-ku, Kobe-shi, Hyogo 6508670 (JP); WADA, Hisao, Chuo-ku, Kobe-shi, Hyogo 6508670 (JP); FUKUDA, Hiroaki, Chuo-ku, Kobe-shi, Hyogo 6508670 (JP)
(74) Representative: Puschmann Borchert Kaiser Klettner Patentanwälte Partnerschaft mbB
(86) International application number: PCT/JP2021/036879
(87) International publication number: WO 2022/097409

(57) **Abstract**

A hand 100 includes: a base 1; two first fingers 21 extending from the base 1 and bendable; an opening/closing actuator 3 that is disposed in the base 1 and moves the two first fingers 21 in a predetermined opening/closing direction A so that the two first fingers 21 grip a workpiece; and a bending actuator 3 that is disposed in the base 1 and causes the two first fingers 21 to bend. Each of the first fingers 21 includes a second part 23 extending from the base 1 and a first part 22 coupled to the second part 23 to be rotatable about a rotation axis B parallel to the opening/closing direction A. The first part 22 is bendable with respect to the second part 23. The first part 22 includes a damper 25 that causes the first part 22 to elasticity extend and contract in an extension direction C2 of the first part 22.

## Description

### FIELD

The present disclosure relates to a hand, a robot, a robot system, and a control method for a hand.

### BACKGROUND

A robot hand known to date grips a workpiece with two fingers. A robot hand disclosed in Patent Document 1, for example, includes a common frame supporting two fingers. In the robot hand of the Patent Document 1, the frame is elastically supported to thereby absorb shock caused by contact between the fingers and a base on which a workpiece is placed.

### CITATION LIST

### PATENT DOCUMENT

Patent Document 1: Japanese Unexamined Utility Model Registration Application Publication No. H05-6074

### SUMMARY

### TECHNICAL PROBLEM

In a robot, as flexibility in operation of a hand increases, the amount of operation of a robot arm to which the hand is coupled decreases accordingly. Thus, the robot can be controlled easily. A shock absorbing mechanism of the hand described in Patent Document 1 is an element for increasing flexibility in operation of the hand, but there is still room for improvement in enhancing flexibility of operation of the hand.

It is therefore an object of the technique of the present disclosure to further enhance flexibility of operation of a hand.

The technique of the present disclosure is directed to a hand including: a base; two fingers that extend from the base and are bendable; an opening/closing actuator that is disposed in the base and moves the two fingers in a predetermined opening/closing direction so that the two fingers grip a workpiece; and a bending actuator that is disposed in the base and causes the two fingers to bend. Each of the fingers includes a second part extending from the base and a first part coupled to the second part to be rotatable about a rotation axis parallel to the opening/closing direction, the first part being bendable with respect to the second part. The first part includes a damper that causes the first part to elastically extend and contract in an extension direction of the first part.

In the technique, since each of the two fingers includes a damper, the fingers can obtain damping functions independently of each other. In addition, the presence of the bending actuator enables movement of the workpiece and a change of gripping posture of the workpiece by bending the fingers. Furthermore, since the damper is not disposed in the second part but in the first part, the second part does not perform an extension and contraction action. On the other hand, in the bending actuator, the power transmitter for rotating the first part, for example, can be disposed through the second part. Design of such a power transmitter, for example, does not need consideration of an extension and contraction action of the second part, and thus, complication of the configuration of the power transmitter and other devices, and also the bending actuator, can be avoided. In addition, since the first part includes the damper, the damping direction changes depending on bending of the fingers. Although the direction on which shock is exerted varies depending on situations of application of the hand, the shock is appropriately absorbed in some cases by changing the damping direction in conformity with the first part. In this manner, various actions of the hand are enabled.

Another technique of the present disclosure is directed to a robot including: the hand described above; and a robot arm to which the hand is coupled.

The technique described above enables various actions of the hand as a robot. Thus, it is unnecessary to deal with the robot arm, and thus, the amount of operation of the robot arm can be reduced.

The hand described above can further enhance flexibility in operation of the hand.

The robot described above can further enhance flexibility in operation of the hand.

### BRIEF DESCRIPTION OF THE DRAWINGS

[FIG. 1] FIG. 1 is a schematic view illustrating a configuration of a robot system.
[FIG. 2] FIG. 2 is a front view of a hand.
[FIG. 3] FIG. 3 is a cross-sectional view of the hand taken along line III-III in FIG. 2.
[FIG. 4] FIG. 4 is an enlarged cross-sectional view about a first part of a first finger.
[FIG. 5] FIG. 5 is a cross-sectional view of a first hand taken along line V-V in FIG. 3.
[FIG. 6] FIG. 6 is an enlarged cross-sectional view about a second part of the first finger.
[FIG. 7] FIG. 7 is a schematic view of a second hand seen from a side opposite to the first hand while showing the inside of the base, where second fingers are fully open.
[FIG. 8] FIG. 8 is a schematic view of the second fingers seen from an advancing side in an axial direction.
[FIG. 9] FIG. 9 is a schematic cross-sectional view about a second gripper.
[FIG. 10] FIG. 10 is a schematic view of the second hand seen from the side opposite to the first hand while showing the inside of the base, where the second fingers are fully closed.
[FIG. 11] FIG. 11 is a schematic cross-sectional view about the second gripper where the second fingers are fully closed.
[FIG. 12] FIG. 12 is a schematic view of the second hand seen from the side opposite to the first hand while showing the inside of the base, where the second fingers are fully closed and advance in the axial direction.
[FIG. 13] FIG. 13 is an enlarged cross-sectional view about a damper.
[FIG. 14] FIG. 14 is a perspective view illustrating a schematic configuration of a bearing unit.
[FIG. 15] FIG. 15 is a perspective view illustrating a schematic configuration of a base plate.
[FIG. 16] FIG. 16 is a perspective view illustrating a schematic configuration of an angle.
[FIG. 17] FIG. 17 is a perspective view illustrating a schematic configuration of a bearing holder.
[FIG. 18] FIG. 18 is a schematic view illustrating a state where the angle is gripped by a first gripper.
[FIG. 19] FIG. 19 is a schematic view illustrating a state where the angle is placed on the base plate by the first gripper.
[FIG. 20] FIG. 20 is a schematic view illustrating a state where a bolt is gripped by the first gripper.
[FIG. 21] FIG. 21 is a schematic view illustrating a state where the second gripper receives the bolt from the first gripper.
[FIG. 22] FIG. 22 is a schematic view illustrating a state where the second gripper screws the bolt into a screw hole.
[FIG. 23] FIG. 23 is a schematic view illustrating a state where the second gripper grips the bearing holder.
[FIG. 24] FIG. 24 is a schematic view illustrating a state where the second gripper inserts the bearing holder into the angle.
[FIG. 25] FIG. 25 is a schematic view illustrating a state of the bearing holder inserted in the angle when seen from an end surface side, and illustrates a state where the first finger is engaged with a counterbore.
[FIG. 26] FIG. 26 is a schematic view illustrating a state where the second gripper screws the bolt into the screw hole of the angle.
[FIG. 27] FIG. 27 is a schematic view illustrating a state where the first gripper grips a shaft.
[FIG. 28] FIG. 28 is a schematic view illustrating a state where the second gripper receives the shaft from the first gripper.
[FIG. 29] FIG. 29 is a schematic view illustrating a state where the second gripper inserts the shaft into a bearing of the bearing holder.
[FIG. 30] FIG. 30 is a schematic view illustrating a state where the first gripper grips the angle.
[FIG. 31] FIG. 31 is a schematic view illustrating a state of the first gripper that performs eccentric gripping.
[FIG. 32] FIG. 32 is a schematic view illustrating a state of the first gripper that performs eccentric gripping.
[FIG. 33] FIG. 33 is a schematic view illustrating a state of the first gripper that performs eccentric gripping.
[FIG. 34] FIG. 34 is a view illustrating a state where the first gripper gripping the angle has moved upward.
[FIG. 35] FIG. 35 is a schematic view illustrating a state of the bearing holder inserted in the angle when seen from an end surface side, and illustrates a state where the first finger is pushed against a start point of a movement path.
[FIG. 36] FIG. 36 is a cross-sectional view of the angle and the bearing holder taken along line Z1-Z1 in FIG. 35.
[FIG. 37] FIG. 37 is a cross-sectional view of the angle and the bearing holder taken along line Z2-Z2 in FIG. 25.
[FIG. 38] FIG. 38 is a schematic view illustrating a state of the bearing holder inserted in the angle when seen from an end surface side, and illustrates a state where the first finger has moved to an end point of the movement path.
[FIG. 39] FIG. 39 is a cross-sectional view of the angle and the bearing holder taken along line Z3-Z3 in FIG. 38.
[FIG. 40] FIG. 40 is a schematic view of the first gripper illustrating a state where the first finger is pushed against the surface of a workpiece.
[FIG. 41] FIG. 41 is a schematic view of the first gripper illustrating a state where the first finger is engaged with an engager of the workpiece.
[FIG. 42] FIG. 42 is a schematic view of the first gripper illustrating a state where the first finger is in contact with a tilted placing table.
[FIG. 43] FIG. 43 is a schematic view of the first gripper illustrating a state where the first finder grips the workpiece on the tilted placing table.
[FIG. 44] FIG. 44 is a schematic view of the first gripper illustrating a state where the first finger bends and pushes the workpiece against a fixing plate.

### DESCRIPTION OF EMBODIMENTS

An exemplary embodiment will be described in detail hereinafter with reference to the drawings.

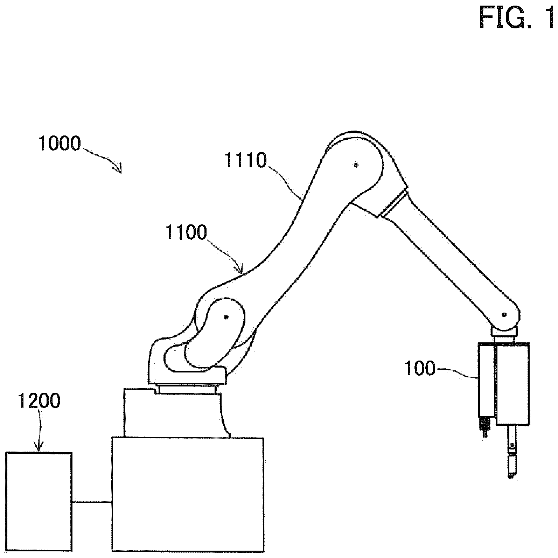

FIG. 1 is a schematic view illustrating a configuration of a robot system 1000.

The robot system 1000 includes a robot 1100 and a controller 1200 that controls the robot 1100.

The robot 1100 is, for example, an industrial robot. The robot 1100 includes a robot arm 1110 and a hand 100 coupled to the distal end of the robot arm 1110. The robot 1100 operates, that is, moves the hand 100 by the robot arm 1110. The hand 100 is a so-called end effector. The hand 100 grips a workpiece W. The hand 100 also adjusts gripping of the workpiece W and/or combines the workpiece W to another workpiece, for example.

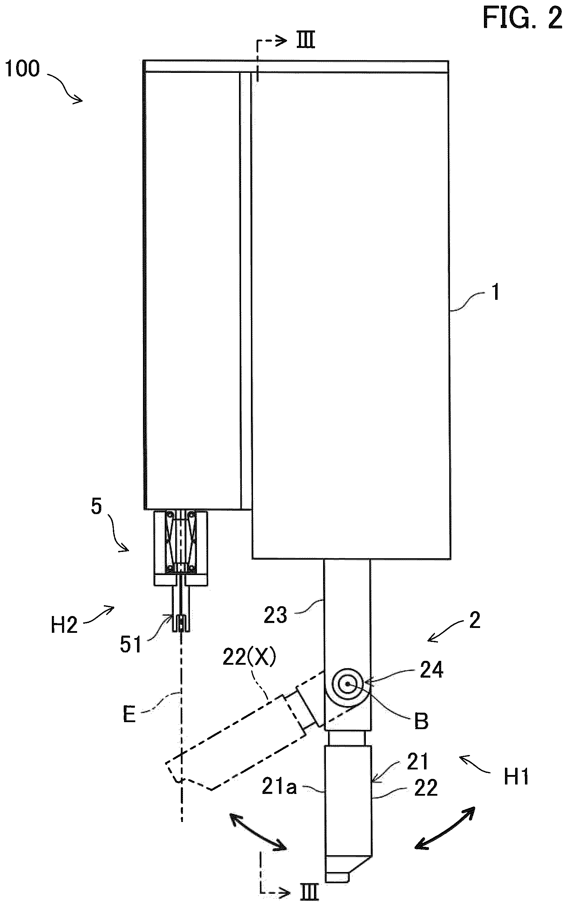

FIG. 2 is a front view of the hand 100. The hand 100 includes a first hand H1 and a second hand H2. The first hand H1 and the second hand H2 are disposed on a common base 1. The first hand H1 and the second hand H2 can execute a treatment individually or in cooperation. Examples of the individual treatment include a treatment in which the first hand H1 or the second hand H2 grips a workpiece. Examples of the cooperative treatment include a treatment in which the first hand H1 delivers a workpiece to the second hand H2 and a treatment in which the first hand H1 and the second hand H2 grip a workpiece.

### =First Hand=

The first hand H1 includes the base 1 and a first gripper 2 disposed on the base 1. The first hand H1 performs various treatments on a workpiece by the first gripper 2.

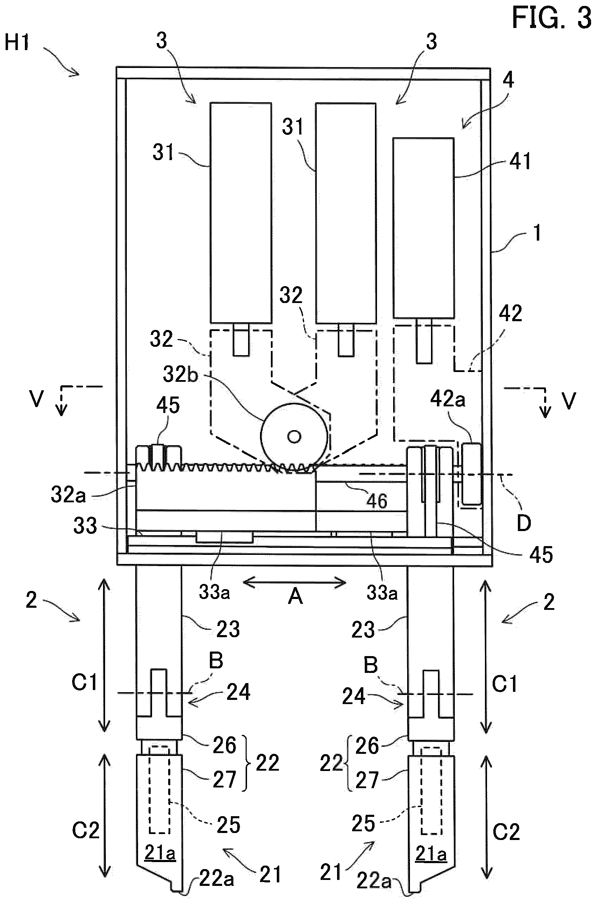

FIG. 3 is a cross-sectional view of the hand 100 taken along line III-III in FIG. 2. Specifically, FIG. 3 is a view of the first hand H1 seen from the second hand H2, while showing the inside of the base 1. In FIG. 3, an internal configuration of the base 1 is schematically shown.

The first gripper 2 includes two first fingers 21 extending from the base 1, opening/closing actuators 3 that open and close the two first fingers 21 in predetermined opening/closing directions A, and a bending actuator 4 that bends the two first fingers 21. Each of the first fingers 21 includes a damper 25 that absorbs shock on the first finger 21.

The two first fingers 21 moves toward or away from each other in the opening/closing directions A by the opening/closing actuators 3. Accordingly, the two first fingers 21 grips a workpiece and release gripping of the workpiece. In this example, the opening/closing actuator 3 cause the two first fingers 21 to operate individually. That is, the first hand H1 includes two opening/closing actuators 3 respectively associated with the two first fingers 21. The two first fingers 21 are bendable by the bending actuator 4. The bending actuator 4 causes the two first fingers 21 to operate simultaneously. The first hand H1 includes one bending actuator 4 common to the two first fingers 21. The opening/closing actuators 3 and the bending actuator 4 are disposed on the base 1.

### -First Finger-

As illustrated in FIGS. 2 and 3, each of the first fingers 21 includes a first part 22 at the distal end and the second part 23 at the base 1. The first part 22 and the second part 23 are coupled to each other by a joint 24. The first part 22 rotates about a rotation axis B parallel to the opening/closing directions A through the joint 24. Accordingly, the first finger 21 changes to a bent state where the first part 22 is bent with respect to the second part 23 and an extended state where the first part 22 and the second part 23 are extended in a straight line.

The second part 23 is coupled to the base 1. The second part 23 extends from the base 1 in extension directions C1 orthogonal to the opening/closing directions A. The joint 24 is disposed at the distal end of the second part 23.

The first part 22 includes a fixer 26 and a mover 27. The fixer 26 and the mover 27 are aligned in a straight line and extend in extension directions C2. The fixer 26 is coupled to the joint 24. The mover 27 is coupled to the fixer 26 through the damper 25 to be movable in the extension directions C2. A surface of the mover 27 facing the second hand H2 in the extended state of the first finger 21 is a support surface 21a that supports a workpiece when the first hand H1 delivers the workpiece to the second hand H2, for example.

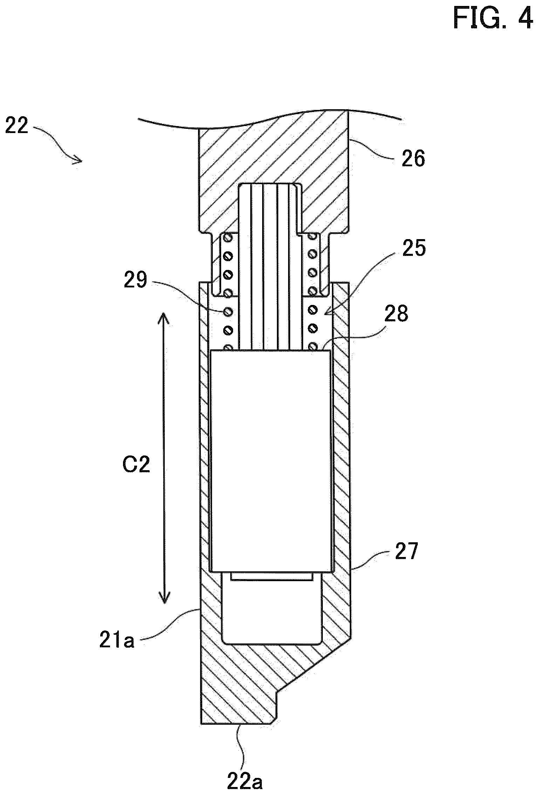

FIG. 4 is an enlarged cross-sectional view about the first part 22 of the first finger 21. As illustrated in FIG. 4, the damper 25 includes a ball spline 28 and a spring 29. The ball spline 28 couples the fixer 26 and the mover 27 to each other. The ball spline 28 allows the mover 27 to be movable in the extension directions C2 with respect to the fixer 26, and prevents the mover 27 from rotating about the axis of the ball spline 28. The spring 29 is compressed between the fixer 26 and the mover 27. The spring 29 extends and contracts in the extension directions C2. The spring 29 pushes the mover 27 in the extension directions C2 so that the mover 27 extends most from the fixer 26. The first part 22 is normally in this state where the mover 27 extends most from the fixer 26 (hereinafter referred to as a "normal state"). The ball spline 28 is an example of a guide. The spring 29 is an example of an elastic member. The ball spline 28 includes a roller that guides the mover 27 in the extension directions C2 by rolling. The spring 29 elastically pushes the mover 27.

On the other hand, when shock is exerted from a distal end 22a of the mover 27 (hereinafter referred to as the distal end 22a of the first finger 21 or the distal end 22a of the first part 22) on the mover 27 in the extension directions C2, the mover 27 moves toward the fixer 26 in the extension directions C2, and the spring 29 is compressed to be deformed. Accordingly, the shock is absorbed by the spring 29. Once the shock is removed, the spring 29 extends, and the mover 27 returns to the normal state.

In this manner, the first finger 21 bends by rotation of the first part 22 about the rotation axis B, and absorbs shock on the first finger 21 by extension and contraction of the first part 22.

### -Opening/closing Actuator-

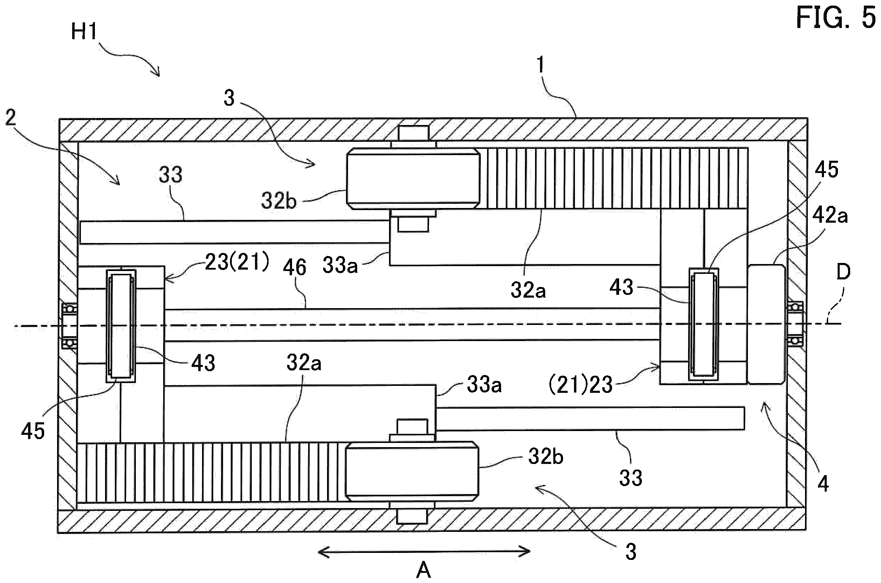

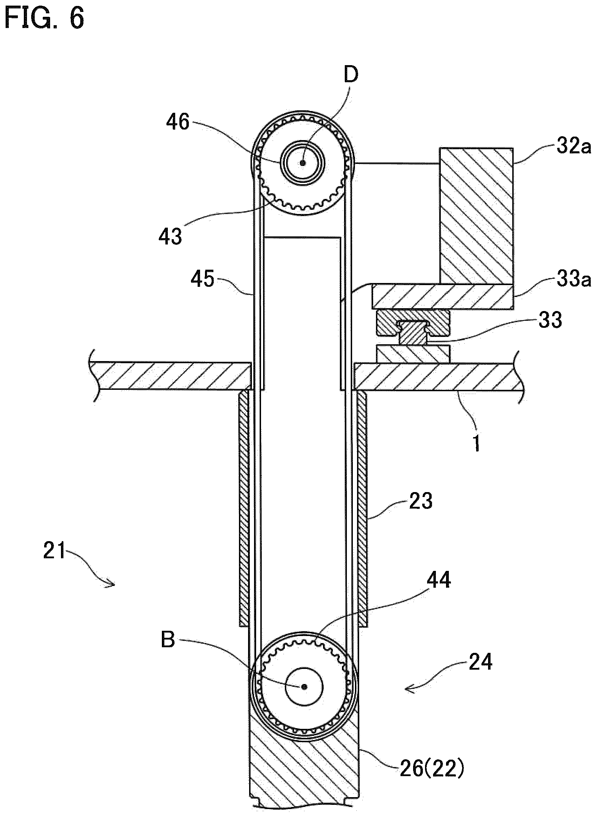

FIG. 5 is a cross-sectional view of the first hand H1 taken along line V-V in FIG. 3. FIG. 6 is an enlarged cross-sectional view about the second part 23 of the first finger 21. FIG. 5 does not show a part of gear trains 32 of the opening/closing actuators 3 and a part of a gear train 42 of the bending actuator 4.

As illustrated in FIGS. 3 and 5, each of the opening/closing actuators 3 includes a first motor 31, the gear train 32 that transfers a driving force of the first motor 31, and a guide 33 that guides the first fingers 21 in the opening/closing directions A. The two opening/closing actuators 3 are disposed not to interfere with each other in the base 1.

The first motor 31 is, for example, a servo motor and includes an encoder. A driver of the first motor 31 includes a current sensor.

The first fingers 21 is slidably coupled to the guide 33. Specifically, the guide 33 is disposed in the base 1 and extends in the opening/closing directions A. A block 33a is slidably disposed on the guide 33. The second part 23 of each of the first fingers 21 is attached to the block 33a.

The gear train 32 transfers a driving force of the first motor 31 to the first finger 21. For example, the gear train 32 includes a rack 32a and a pinion 32b serving as a rack-and-pinion. The rack 32a is attached to the block 33a. In this state, the rack 32a extends in the opening/closing directions A. That is, teeth of the rack 32a are arranged in the opening/closing directions A. The pinion 32b meshes with the rack 32a. Accordingly, a rotary force of the first motor 31 transferred to the pinion 32b is converted to a linear moving force of the rack 32a in the opening/closing directions A. When the rack 32a moves in the opening/closing directions A, the block 33a and the first fingers 21 also move in the opening/closing directions A together with the rack 32a.

In the thus-configured opening/closing actuator 3, when the first motor 31 is driven, a rotation driving force of the first motor 31 is transferred by the gear train 32. Finally, the rotational driving force is transferred as a linear moving force to the block 33a by the rack 32a and the pinion 32b included in the gear train 32. The block 33a moves in the opening/closing directions A along the guide 33. Together with the block 33a, the first finger 21 also moves in the opening/closing directions A. The direction of movement of the first finger 21 in the opening/closing directions A is switched by the rotation direction of the first motor 31. The position of the first finger 21 in the opening/closing directions A is detected based on an encoder output of the first motor 31. A rotation torque of the first motor 31 in movement of the first finger 21 is detected based on a detection result of the current sensor.

Since the opening/closing actuator 3 is disposed in each of the first fingers 21, the two first fingers 21 are moved in the opening/closing directions A independently of each other by the opening/closing actuators 3 thereof.

### -Bending Actuator-

As illustrated in FIGS. 3, 5, and 6, the bending actuator 4 includes a second motor 41, the gear train 42 that transfers a driving force of the second motor 41, first timing pulleys 43 that receive a driving force of the second motor 41 through the gear train 42, second timing pulleys 44 disposed at the joints 24, and timing belts 45 that transfer rotation of the first timing pulleys 43 to the second timing pulleys 44. Each first finger 21 has one set of the first timing pulley 43, the second timing pulley 44, and the timing belt 45.

The second motor 41 is, for example, a servo motor and includes an encoder. A driver of the second motor 41 includes a current sensor.

The gear train 42 includes a worm gear, a worm wheel, a spur gear 42a, and so forth. The spur gear 42a is rotatably supported through the ball spline 46. Specifically, the ball spline 46 is disposed in the base 1 and extends in the opening/closing directions A. The ball spline 46 is supported by the base 1 to be rotatable about an axis D of the ball spline 46. The spur gear 42a is non-rotatably disposed to the ball spline 46. That is, the spur gear 42a rotates integrally with the ball spline 46 about the axis D.

The first timing pulleys 43 are non-rotatably disposed to the ball spline 46. Two first timing pulleys 43 are disposed to the ball spline 46. The first timing pulleys 43 rotate together with the ball spline 46 about the axis D. That is, rotation of the spur gear 42a is transferred to the first timing pulleys 43 through the ball spline 46. In addition, the first timing pulleys 43 are slidable with respect to the ball spline 46 in the direction of the axis D.

Each of the first timing pulleys 43 is coupled to an associated one of the first fingers 21. Specifically, the first timing pulley 43 is coupled to an end of the second part 23 near the base 1 and is rotatable about the axis D. That is, when the first finger 21 moves in the opening/closing directions A along the guide 33, the first timing pulley 43 moves in the direction of the axis D of the ball spline 46 together with the first finger 21. While the ball spline 46 rotates, the first finger 21 does not rotate and the first timing pulley 43 rotates together with the ball spline 46.

The second timing pulley 44 is non-rotatably provided to the fixer 26 of the first part 22 in the joint 24 of each first finger 21. That is, when the second timing pulley 44 rotates, the first part 22 rotates about the rotation axis B.

The timing belt 45 is wound around the first timing pulley 43 and the second timing pulley 44. The timing belt 45 transfers rotation of the first timing pulley 43 to the second timing pulley 44.

In the thus-configured bending actuator 4, when the second motor 41 is driven, a rotational driving force of the second motor 41 is transferred to the ball spline 46 through the gear train 42. When the ball spline 46 rotates about the axis D, the first timing pulley 43 disposed to the ball spline 46 rotates about the axis D. Since the first finger 21 is coupled to the guide 33, the first finger 21 does not rotate. Rotation of the first timing pulley 43 is transferred to the second timing pulley 44 by the timing belt 45. When the second timing pulley 44 rotates, the first part 22 of the first finger 21 rotates about the rotation axis B. Accordingly, the first finger 21 bends. At some rotation angle of the first part 22, the first part 22 and the second part 23 are aligned in a straight line.

The rotation direction of the first part 22 about the rotation axis B, that is, the direction of bending of the first finger 21, is switched depending on the rotation direction of the second motor 41. The rotation position of the first part 22 about the rotation axis B, that is, the degree or bending or the bending angle of the first finger 21, is detected based on an encoder output of the second motor 41. A rotation torque of the second motor 41 when the first finger 21 bends is detected based on a detection result of the current sensor.

Each first finger 21 includes a set of the first timing pulley 43, the second timing pulley 44, and the timing belt 45. The first timing pulleys 43 of the first fingers 21 are disposed to the common ball spline 46. That is, driving of the common second motor 41 causes the two first fingers 21 to bend in the same manner at the same time. The direction and angle of bending are the same for the two first fingers 21.

Each first finger 21 can move in the closing directions A along the guide 33. At this time, the first timing pulley 43 also moves in the opening/closing directions A along the ball spline 46 together with the first finger 21. That is, the bending actuator 4 enables the first fingers 21 to bend at any position in the opening/closing directions A.

### -Brief Description of Operation of First Hand H1-

The first hand H1 configured as described above moves the two first fingers 21 in the opening/closing directions A by the opening/closing actuators 3 to thereby enable the two first fingers 21 to grip a workpiece. For example, the first hand H1 can grip a workpiece by causing the two first fingers 21 to approach each other (to perform a closing action) in the opening/closing directions A, and also grip a workpiece by causing the two first fingers 21 to move away from each other (to perform an opening action) in the opening/closing directions A.

Since the first hand H1 enables the two first fingers 21 to operate independently of each other by the opening/closing actuators 3, the first hand H1 can grip a workpiece at a position eccentric from the center of the first hand H1 in the opening/closing directions A (hereinafter such gripping will be referred to as eccentric gripping). The center of the first hand H1 herein is, for example, a center Q of a movable range of the first fingers 21 (hereinafter referred to simply as "center Q of the movable range"). More Specifically, the first hand H1 adjusts the amounts of movement of the two first fingers 21 in accordance with the position of the workpiece and grips the workpiece at a position eccentric from the center of the first hand H1. In this manner, even if the workpiece is deviated from the center of the first hand H1, the first hand H1 can grip the workpiece appropriately with the two first fingers 21.

As illustrated in FIG. 2, the first hand H1 can bend the two first fingers 21. Each of the first fingers 21 bends such that the first part 22 moves between a position at which an imaginary region X defined by projecting the first part 22 in the opening/closing directions A (i.e., a region defined by projecting the first part 22 in a direction orthogonal to the drawing sheet in FIG. 2) interferes with an axis E of a second gripper 5 described later and a position at which the imaginary region X does not interfere with the axis E. For example, the first hand H1 can bend the two first fingers 21 gripping the workpiece by the bending actuator 4. Thus, it is also possible to move the workpiece or change the posture of the workpiece by bending the two first fingers 21. Accordingly, the amount of operation of the robot arm 1110 can be reduced.

The first hand H1 can absorb shock on the first parts 22 of the first fingers 21 by the dampers 25. Thus, in moving the first hand H1 to the position of the workpiece, shock on the first parts 22 caused by contact between the distal ends 22a of the first parts 22 and the placing table of the workpiece can be absorbed.

### =Second Hand=

The second hand H2 is disposed on the base 1 shared by the first hand H1. The second hand H2 grips the workpiece and execute various treatments.

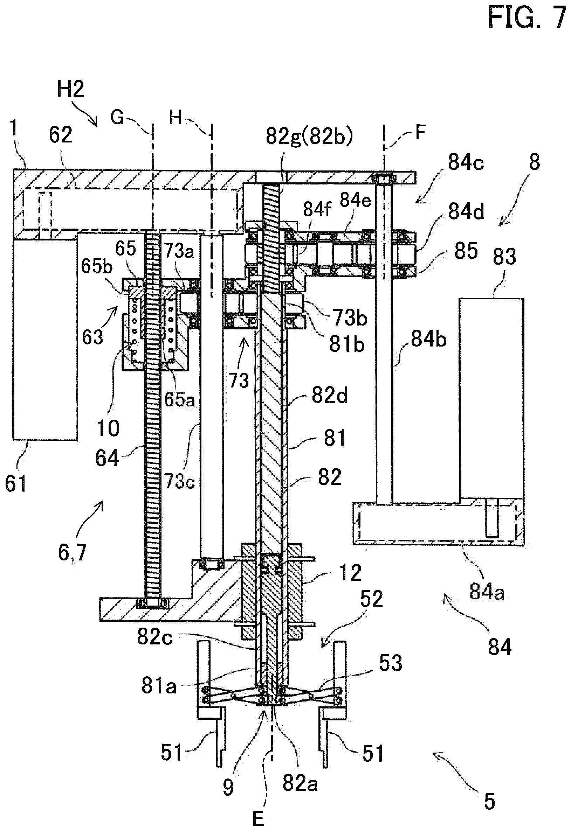

The second hand H2 will now be described in further detail. FIG. 7 is a schematic view of the second hand H2 seen from a side opposite to the first hand H1 while showing the inside of the base 1, where the second fingers 51 are fully open.

The second hand H2 includes the second gripper 5 that grips a workpiece, a straight-moving actuator 6 that causes the second gripper to move straight in a predetermined direction of the axis E, and a rotation actuator 7 that causes the second gripper 5 to rotate about the axis E. The second gripper 5 includes three second fingers 51 that grip a workpiece, and a linkage 52 that opens and closes the three second fingers 51. The second hand H2 can move a workpiece gripped by the second gripper 5 straight in the direction of the axis E while rotating the workpiece about the axis E. Accordingly, the second hand H2 can insert the workpiece into a hole or screws the workpiece into a screw hole, for example. A side to which the second fingers 51 advance from the base 1 in the direction of the axis E will be hereinafter referred to simply as an "advancing side," and a side to which the second fingers 51 retract to the base 1 will be hereinafter referred to simply as a "retracting side."

The second hand H2 may also include an opening/closing actuator 8 that opens and closes the second fingers 51. The second hand H2 may also include a push actuator 9 that pushes a workpiece released from gripping by the second gripper 5 in the direction of the axis E. The second hand H2 may include a damper 10 that elastically supports the second fingers 51 in the direction of the axis E.

### -Gripper-

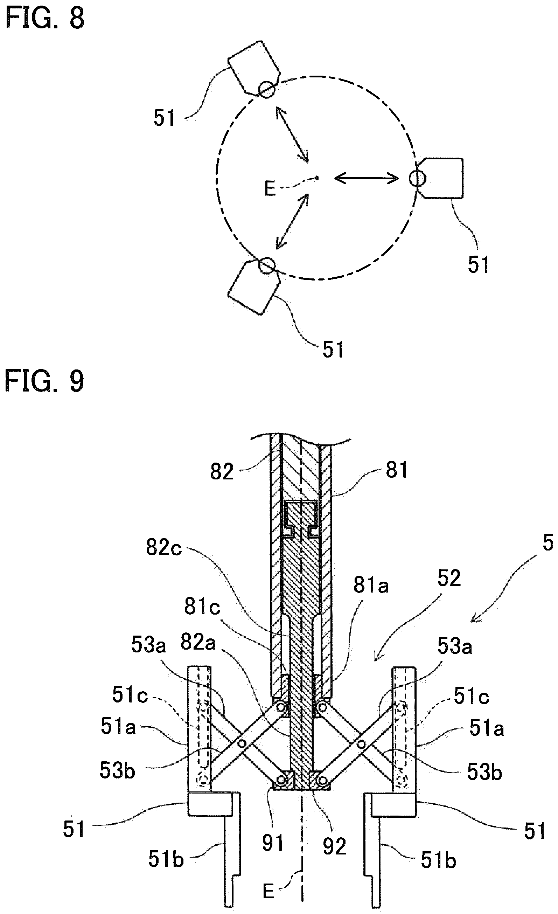

FIG. 8 is a schematic view of the second fingers 51 seen from the advancing side in the direction of the axis E. FIG. 9 is a schematic cross-sectional view about the second gripper 5.

The second gripper 5 includes three second fingers 51, and the linkage 52 that opens and closes the three second fingers 51. The second gripper 5 is an example of a gripper.

As illustrated in FIG. 8, the three second fingers 51 are arranged at regular intervals (i.e., at intervals of 120 degrees) in a circumferential direction about the axis E. The three second fingers 51 are opened and closed about the axis E by the linkage 52. That is, the three second fingers 51 move away from each other and approach each other in a radial direction about the axis E. Accordingly, the three second fingers 51 grip a workpiece and release gripping of the workpiece. The three second fingers 51 are also opened and closed at the same distance from the axis E. The three second fingers 51 are an example of at least two fingers. Although the three second fingers 51 are arranged at intervals of 120 degrees about the axis E, FIG. 7 shows a state where two second fingers 51 are disposed at intervals of 180 degrees about the axis E for easy illustration of the configuration.

As illustrated in FIG. 9, each of the second fingers 51 generally extends in the direction of the axis E. Each second finger 51 includes a base 51a and a nail 51b. The nail 51b is disposed at the distal end of the base 51a. The nail 51b defines a distal end portion of the second finger 51. The second fingers 51 grip a workpiece with the nails 51b.

The linkage 52 includes links 53. The links 53 include three sets of first links 53a and second links 53b. In the drawings, the links are distinguished from each other and denoted by "53a" and "53b" in some cases or are not distinguished from each other and collectively denoted by "53" in other cases. One set of the first link 53a and the second link 53b are coupled to each of the second fingers 51. The first links 53a and the second links 53b intersect with each other, and are rotatably coupled to each other at longitudinal centers thereof. The links 53 are disposed inside the three second fingers 51 in the radial direction about the axis E.

The first links 53a are rotatably coupled to the second fingers 51 at one end. Specifically, the base 51a of each second finger 51 includes an elongated hole 51c extending in the extension direction of the second finger 51. One end of each first link 53a is rotatably and slidably coupled to the elongated hole 51c.

One end of each second link 53b is rotatably coupled to the second finger 51. Specifically, one end of the second link 53b is rotatably coupled to a portion of the base 51a of the second finger 51 closer to the distal end of the second finger 51 than the elongated hole 51c.

### -Opening/closing Actuator-

As illustrated in FIG. 7, the opening/closing actuator 8 opens and closes the three second fingers 51 by operating the linkage 52. The opening/closing actuator 8 includes an outer cylinder 81, a shaft 82, a third motor 83 that drives the linkage 52, and a gear train 84 that transfers a driving force of the third motor 83 to the shaft 82.

The outer cylinder 81 and the shaft 82 extend in the direction of the axis E coaxially about the axis E. Specifically, the outer cylinder 81 has a substantially cylindrical shape about the axis E. The shaft 82 has a substantially columnar shape about the axis E.

In the outer cylinder 81 and the shaft 82, ends on one side in the direction of the axis E will be referred to as a first end 81a and a first end 82a, respectively, and ends on the other side in the direction of the axis E will be referred to as a second end 81b and a second end 82b. The first end 81a and the first end 82a are ends on the advancing side in the direction of the axis E. The second end 81b and the second end 82b are ends on the retracting side in the direction of the axis E. The second gripper 5 is coupled to the first end 81a and the first end 82a.

The outer cylinder 81 is supported by a bearing 12 attached to the base 1 and is movable in the direction of the axis E and rotatable about the axis E.

The shaft 82 is inserted in the outer cylinder 81. The outer cylinder 81 and the shaft 82 are rotatable relative to each other about the axis E and movable relative to each other in the direction of the axis E. The first end 82a of the shaft 82 projects outward from the first end 81a of the outer cylinder 81. The second end 82b of the shaft 82 projects outward from the second end 81b of the outer cylinder 81.

The shaft 82 is divided into a link shaft 82c including the first end 82a and a shaft body 82d including the second end 82b. The link shaft 82c and the shaft body 82d are coupled to each other to be rotatable about the axis E and immovable in the direction of the axis E. The second end 82b has an external thread 82g.

As illustrated in FIG. 9, a pushing block 91 is disposed at the distal end of the link shaft 82c, that is, the distal end of the first end 82a.

A substantially cylindrical link block 81c that guides the link shaft 82c is disposed at the first end 81a of the outer cylinder 81. The link shaft 82c penetrates the link block 81c. A small clearance is present between the link shaft 82c and the link block 81c.

The linkage 52 is coupled to the first end 81a of the outer cylinder 81 and the first end 82a of the shaft 82. Specifically, ends of the first links 53a on one side (ends not coupled to the second fingers 51) are rotatably coupled to the first end 82a of the shaft 82, specifically, the pushing block 91. Ends of the second links 53b on one side (ends not coupled to the second fingers 51) are rotatably coupled to the first end 81a of the outer cylinder 81, specifically, the link block 81c.

When the link shaft 82c moves in the direction of the axis E, relative positions of ends of the first links 53a one side and ends of the second links 53b on one side change, and accordingly, the positions of the second fingers 51 in the direction of the axis E and the positions of the second fingers 51 in the radial direction about the axis E change.

The third motor 83 is, for example, a servo motor and includes an encoder. A driver of the third motor 83 includes a current sensor. As illustrated in FIG. 7, the third motor 83 is supported by the base 1.

The gear train 84 includes a first gear train 84a and a second gear train 84c disposed in this order from the third motor 83.

The first gear train 84a includes gears. The gears of the first gear train 84a are supported by the base 1 to be rotatable about an axis parallel to the axis E. The first gear train 84a transfers a rotational driving force of the third motor 83 to the second gear train 84c through the ball spline 84b. The ball spline 84b includes an axis F parallel to the axis E of the shaft 82. The ball spline 84b is supported by the base 1 to be rotatable about the axis F. A gear (gear at the final stage) in the first gear train 84a is coupled to the ball spline 84b to be nonrotatable about the axis F and immovable along the axis F. That is, when the gears of the first gear train 84a rotate, the ball spline 84b rotates about the axis F.

The second gear train 84c is housed in a gear box 85. The second gear train 84c includes a first gear 84d, a second gear 84e, and a third gear 84f. The first gear 84d, the second gear 84e, and the third gear 84f are supported by the gear box 85 to be rotatable about an axis parallel to the axis E.

The first gear 84d is coupled to the first gear train 84a through the ball spline 84b. The first gear 84d is coupled to the ball spline 84b to be non-rotatable about the axis F and movable along the axis F. That is, the first gear 84d rotates integrally with the ball spline 84b.

The internal periphery of the third gear 84f has an internal thread. The third gear 84f is screwed with the external thread 82g of the shaft 82. The second gear 84e is located between the first gear 84d and the third gear 84f and meshes with each of the first gear 84d and the third gear 84f.

The gear box 85 supports the outer cylinder 81 such that the outer cylinder 81 is rotatable about the axis E and immovable in the direction of the axis E. The shaft 82 is supported by the gear box 85 through the third gear 84f. The gear box 85 restricts rotation of the shaft 82 about the axis E to prevent the shaft 82 from rotating about the axis E.

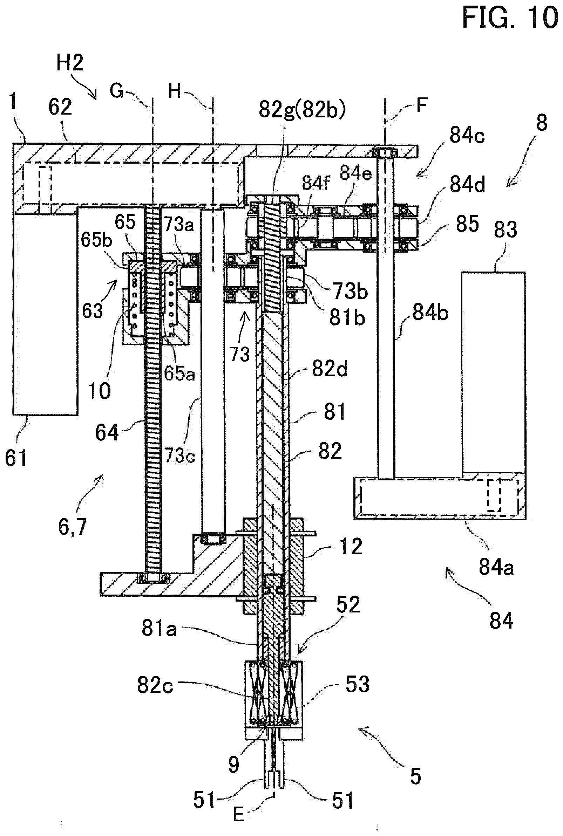

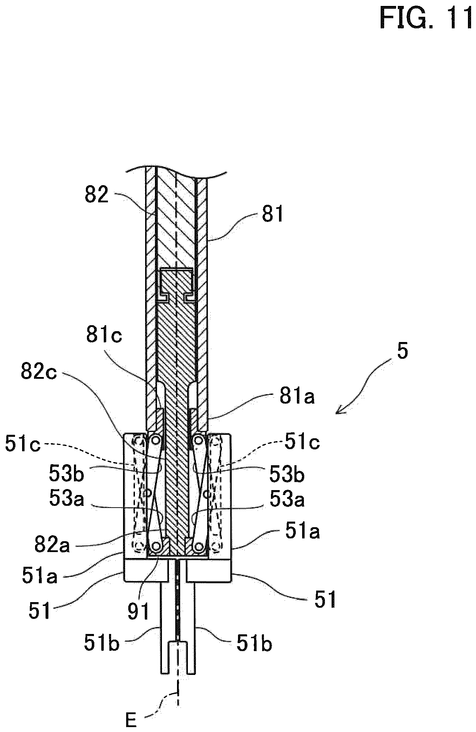

Operation of the thus-configured opening/closing actuator 8 will be described. FIG. 10 is a schematic view of the second hand H2 seen from a side opposite to the first hand H1 while showing the inside of the base 1, where the second fingers 51 are fully closed. FIG. 11 is a schematic cross-sectional view about the second gripper 5 where the second fingers 51 are fully closed.

When the third motor 83 is driven, a rotational driving force of the third motor 83 is transferred to the ball spline 84b through the first gear train 84a. When the ball spline 84b rotates about the axis F, the first gear 84d coupled to the ball spline 84b rotates about the axis F. Rotation of the first gear 84d is transferred to the third gear 84f through the second gear 84e. Since the shaft 82 does not rotate about the axis E, when the third gear 84f rotates, the shaft 82 moves in the direction of the axis E relative to the third gear 84f, as illustrated in FIG. 10. That is, the shaft 82 moves in the direction of the axis E relative to the outer cylinder 81. The movement of the shaft 82 in the direction of the axis E causes ends of the first links 53a on one side to move in the direction of the axis E together with the shaft 82, as illustrated in FIG. 11. Relative positions of the ends of the second links 53b on one side coupled to the outer cylinder 81 and the ends of the first links 53a on one side coupled to the shaft 82 in the direction of the axis E change so that relative positions of the first links 53a and the second links 53b thereby change. Accordingly, the three second fingers 51 move in the radial direction about the axis E. That is, the three second fingers 51 are opened and closed.

The direction of movement of the shaft 82 in the direction of the axis E, that is, whether the three second fingers 51 move away from or toward one another about axis E, is switched depending on the rotation direction of the third motor 83. The positions of the three second fingers 51 in the radial direction about the axis E, that is, the degree of opening and closing the three second fingers 51, is detected based on an encoder output of the third motor 83. In addition, a rotation torque of the third motor 83 in opening and closing the three second fingers 51 is detected based on a detection result of the current sensor.

### -Straight-moving Actuator and Rotation Actuator-

As described above, the second gripper 5 is coupled to the outer cylinder 81 and the shaft 82. The straight-moving actuator 6 causes the second gripper 5 to move in the direction of the axis E by moving the outer cylinder 81 and the shaft 82 in the direction of the axis E. The rotation actuator 7 causes the second gripper 5 to rotate about the axis E by rotating the outer cylinder 81 and the link shaft 82c of the shaft 82 about the axis E. In this example, some elements are shared by the straight-moving actuator 6 and the rotation actuator 7. Some elements of the straight-moving actuator 6 are shared by the opening/closing actuator 8. Some elements of the rotation actuator 7 are shared by the opening/closing actuator 8.

Specifically, as illustrated in FIGS. 7 and 10, the straight-moving actuator 6 includes a fourth motor 61, a first gear train 62 that transfers a driving force of the fourth motor 61, a feed screwer 63, the outer cylinder 81, and the shaft 82.

The fourth motor 61 is, for example, a servo motor and includes an encoder. A driver of the fourth motor 61 includes a current sensor. The fourth motor 61 is supported by the base 1. The fourth motor 61 is an example of a driver.

The first gear train 62 includes gears rotatably supported by the base 1.

The feed screwer 63 includes a feed screw 64 and a nut 65 as a straight-moving element that meshes with the feed screw 64.

An axis G of the feed screw 64 extends in parallel with the axis E. The feed screw 64 is non-rotatably coupled to a gear included in the first gear train 62. That is, the feed screw 64 rotates about the axis G integrally with this gear.

The nut 65 meshes with the feed screw 64. The nut 65 is housed in the gear box 85. Rotation of the nut 65 is stopped by the gear box 85 not to rotate about the axis G. The nut 65 includes a cylindrical body 65a and a flange 65b disposed on the body 65a.

The nut 65 is elastically pushed against the gear box 85 by the damper 10 in the direction of the axis G, that is, in the direction of the axis E. Specifically, the damper 10 is a spring. More specifically, the damper 10 is a coil spring. The damper 10 is located at the advancing side of the flange 65b in the direction of the axis E. The damper 10 is compressed between the flange 65b and the gear box 85. The damper 10 pushes the gear box 85 by an elastic force against the nut 65 to the advancing side in the direction of the axis E. Accordingly, when the nut 65 moves in the direction of the axis G, the gear box 85 also moves in the direction of the axis G, that is, in the direction of the axis E, together with the nut 65.

The configurations of the outer cylinder 81 and the shaft 82 have been described above. The outer cylinder 81 is supported by the gear box 85 to be rotatable about the axis E and immovable in the direction of the axis E. The shaft 82 is supported by the gear box 85 through the third gear 84f. Accordingly, when the gear box 85 moves in the direction of the axis E, the outer cylinder 81 and the shaft 82 also move in the direction of the axis E together with the gear box 85.

As illustrated in FIGS. 7 and 10, the rotation actuator 7 includes the fourth motor 61, the first gear train 62 that transfers a driving force of the fourth motor 61, a second gear train 73 that further transfers a driving force of the fourth motor 61 from the first gear train 62 to the outer cylinder 81, the outer cylinder 81, and the shaft 82. That is, the fourth motor 61, the first gear train 62, the outer cylinder 81, and the shaft 82 of the rotation actuator 7 are shared by the straight-moving actuator 6.

The second gear train 73 includes a fifth gear 73a and a sixth gear 73b. The fifth gear 73a and the sixth gear 73b are supported by the gear box 85 to be immovable in the direction of the axis E and rotatable about an axis parallel to the axis E.

The fifth gear 73a is coupled to a gear included in the first gear train 62 through the ball spline 73c. An axis H of the ball spline 73c extends in parallel with the axis E. The ball spline 73c is coupled to this gear to be non-rotatable about the axis H. That is, the ball spline 73c rotates about the axis H integrally with this gear.

The fifth gear 73a is coupled to the ball spline 73c to be non-rotatable about the axis Hand movable in the direction of the axis H. That is, the fifth gear 73a rotates integrally with the ball spline 73c. At this time, the fifth gear 73a rotates relative to the gear box 85.

The sixth gear 73b is coupled to the outer cylinder 81 to be non-rotatable about the axis E and immovable in the direction of the axis E. That is, the sixth gear 73b rotates integrally with the outer cylinder 81.

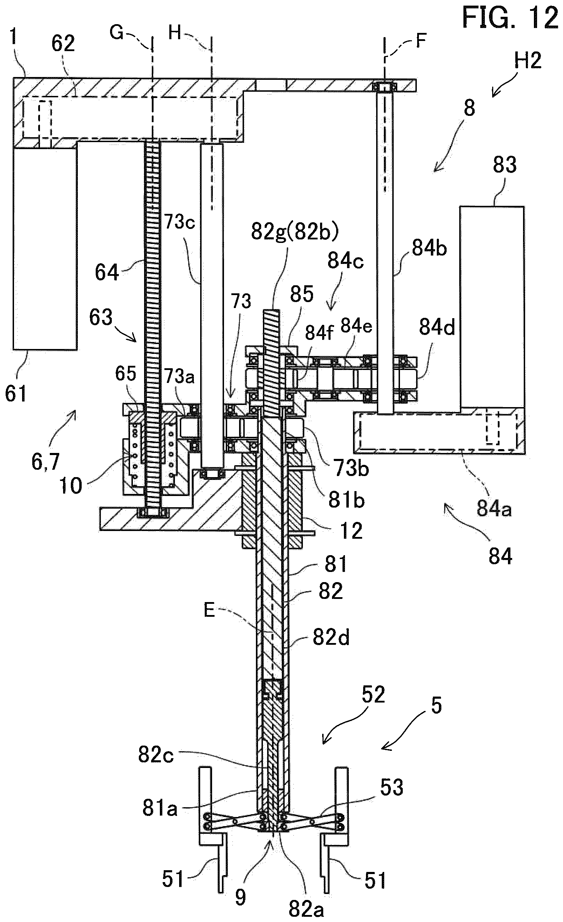

Operation of the thus-configured straight-moving actuator 6 and rotation actuator 7 will be described. FIG. 12 is a schematic view of the second hand H2 seen from a side opposite to the first hand H1 while showing the inside of the base 1, where the second fingers 51 are fully open and have advanced in the direction of the axis E.

When the fourth motor 61 is driven, a rotational driving force of the fourth motor 61 is transferred to the ball spline 73c through the first gear train 62. When the ball spline 73c rotates about the axis H, rotation of the ball spline 73c is transferred to the second gear train 73. Accordingly, the sixth gear 73b rotates about the axis E, and the outer cylinder 81 also rotates about the axis E together with the sixth gear 73b. The second links 53b of the links 53 are coupled to the first end 81a of the outer cylinder 81. The link shaft 82c to which the first links 53a of the links 53 are coupled freely rotates about the axis E with respect to the shaft body 82d. Thus, when the second links 53b rotate about the axis E, the first links 53a also rotate about the axis E together with the second links 53b. Consequently, the three second fingers 51 rotate about the axis E.

Even when the three second fingers 51 rotate about the axis E, the shaft body 82d does not rotate unless the third motor 83 operates. Thus, relative positions of the outer cylinder 81 and the shaft 82 in the direction of the axis E do not change. Consequently, the three second fingers 51 rotate about the axis E without a change of the opening/closing state of the three second fingers 51.

At the same time, a rotational driving force of the fourth motor 61 is transferred to the feed screw 64 through the first gear train 62. When the feed screw 64 rotates about the axis G, the nut 65 screwed with the feed screw 64 moves in the direction of the axis G. When the nut 65 moves along the axis G, the gear box 85 also moves in the direction of the axis G, that is, in the direction of the axis E. The gear box 85 supports the outer cylinder 81 and the shaft 82. Thus, when the gear box 85 moves in the direction of the axis E, the outer cylinder 81 and the shaft 82 also move in the direction of the axis E together with the gear box 85. At this time, the outer cylinder 81 is caused to rotate about the axis E by the rotation actuator 7. That is, the outer cylinder 81 moves straight in the direction of the axis E while rotating about the axis E.

The gear box 85 also supports the second gear train 84c of the opening/closing actuator 8. Thus, while the gear box 85 moves in the direction of the axis E, the second gear train 84c also moves in the direction of the axis E integrally with the gear box 85. The first gear 84d included in the second gear train 84c is also coupled to the ball spline 84b as well as being supported by the gear box 85. Thus, while the gear box 85 moves in the direction of the axis E, the first gear 84d slides along the ball spline 84b and moves in the direction of the axis E together with the gear box 85. At this time, as long as the third motor 83 does not operate, the first gear 84d moves in the direction of the axis E without rotating about the axis F of the ball spline 84b. Thus, gears included in the second gear train 84c do not rotate. Accordingly, while the gear box 85 moves in the direction of the axis E, relative positions of the outer cylinder 81 and the shaft 82 do not change. Consequently, the three second fingers 51 move in the direction of the axis E without a change of the opening/closing state of the three second fingers 51.

The fifth gear 73a is also coupled to the ball spline 73c as well as being supported by the gear box 85. It should be noted that the fifth gear 73a is movable along the ball spline 73c in the direction of the axis H. Thus, while the gear box 85 moves in the direction of the axis E, the fifth gear 73a slides along the ball spline 73c and moves in the direction of the axis E together with the gear box 85. Even when the gear box 85 moves in the direction of the axis E, the fifth gear 73a transfers rotation of the ball spline 73c to the sixth gear 73b appropriately.

### -Push Actuator-

The push actuator 9 pushes a workpiece released from gripping by the second gripper 5 in the direction of the axis E. In this example, the push actuator 9 is formed integrally with the straight-moving actuator 6. That is, some elements of the push actuator 9 are shared by the straight-moving actuator 6. Specifically, as illustrated in FIGS. 7, 10, and 12, the push actuator 9 includes the fourth motor 61, the first gear train 62 that transfers a driving force of the fourth motor 61, the feed screwer 63, the shaft 82, and the pushing block 91 disposed on the shaft 82 (see FIGS. 9 and 11).

As described above, a driving force of the fourth motor 61 is transferred to the feed screwer 63 by the first gear train 62. The feed screwer 63 causes the shaft 82 to move straight in the direction of the axis E through the gear box 85 and other members. As illustrated in FIG. 9, the pushing block 91 is disposed at the distal end of the link shaft 82c of the shaft 82, that is, the distal end of the first end 82a. The pushing block 91 has a pushing surface 92 orthogonal to the axis E. When the shaft 82 moves straight in the direction of the axis E by driving the fourth motor 61, the pushing block 91 moves straight in the direction of the axis E. The pushing block 91 is an example of a pusher.

The links 53 of the linkage 52 are coupled to the pushing block 91. In a case where the second fingers 51 are open (at least a case where the second fingers 51 are open at maximum), the second fingers 51 are retracted outward in the radial direction about the axis E from space on the advancing side of the pushing block 91 in the direction of the axis E. In such a state where the second fingers 51 are in the open state, it is possible to avoid interference of the workpiece and the second fingers 51 when the pushing block 91 moves straight in the direction of the axis E. That is, the pushing block 91 can push the workpiece without interference with the second fingers 51.

### -Damper-

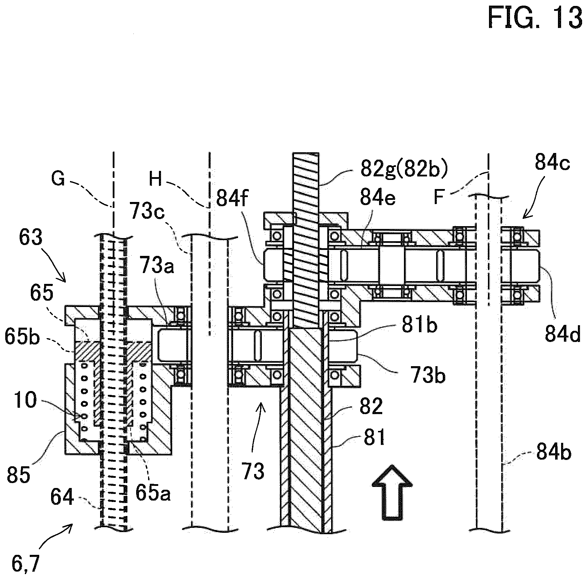

FIG. 13 is an enlarged cross-sectional view about the damper 10. In FIG. 13, members not movable relative to the base 1 in the damping function of the damper 10, that is, the feed screw 64, the nut 65, the ball spline 73c, and the ball spline 84b, are shown by broken lines. The damper 10 elastically couples the nut 65 of the feed screwer 63 to the gear box 85. Specifically, the damper 10 is housed in the gear box 85. The nut 65 and the gear box 85 are elastically coupled to each other such that the gear box 85 is displaceable relative to the nut 65 to the retracting side in the direction of the axis E. The gear box 85 supports the outer cylinder 81 and the shaft 82. The second fingers 51 are coupled to the first end 81a of the outer cylinder 81 and the first end 82a of the shaft 82 through the links 53. That is, the damper 10 elastically supports the second fingers 51 such that the second fingers 51 are displaceable to the retracting side in the direction of the axis E.

When a force is exerted on the second fingers 51 to the retracting side in the direction of the axis E, the damper 10 is elastically deformed, that is, deformed by compression, so that the second fingers 51, the linkage 52, the outer cylinder 81, the shaft 82, and the gear box 85 move as one unit to the retracting side in the direction of the axis E. In this manner, the force exerted on the second fingers 51 is absorbed.

### -Brief Description of Operation of Second Hand H2-

The thus-configured second hand H2 enables the second fingers 51 to move in the direction of the axis E by the straight-moving actuator 6 to a position appropriate for gripping a workpiece in gripping the workpiece with the second fingers 51. For example, the second hand H2 moves the three second fingers 51 in the open state to the vicinity of the workpiece in the direction of the axis E by the straight-moving actuator 6, and then, closes the three second fingers 51 to thereby grip the workpiece with the second fingers 51. The second hand H2 can also grip the workpiece by opening the second fingers 51.

The second hand H2 moves the second fingers 51 straight in the direction of the axis E while rotating the second fingers 51 about the axis E with the workpiece gripped by the second fingers 51. In this manner, the second hand H2 enables work of coupling one of workpieces to be coupled together by insertion to the other workpiece (hereinafter referred to as "coupling work"). The coupling work includes fitting work of coupling two workpieces by fitting and screwing work of coupling two workpieces by screwing. The fitting work includes work of fitting one workpiece into the inside of the other workpiece and work of fitting one workpiece onto the outside of the other workpiece. The screwing work includes work of screwing one workpiece having an external thread into the other workpiece having an internal thread and work of screwing one workpiece having an internal thread to the other workpiece having an external thread. In the fitting work, the second hand H2 can fit one workpiece to the other workpiece by pushing one workpiece by the pushing block 91 in the direction of the axis E, as well as fitting one workpiece to the other workpiece while rotating one workpiece about the axis with the one workpiece gripped by the second fingers 51.

In addition, in the second hand H2, when a force is exerted on the second fingers 51 to the retracting side in the direction of the axis E in gripping a workpiece with the second fingers 51 or in performing coupling work of a workpiece, the second fingers 51 retract in the direction of the axis E and the damper 10 absorbs the force.

The controller 1200 is a robot controller including a computer such as a microcontroller. The controller 1200 executes software such as a basic program as a robot controller stored to thereby control actions of the robot arm 1110 and the hand 100. Specifically, the controller 1200 moves the robot arm 1110 by controlling an actuator (not shown) incorporated in the robot arm 1110. The controller 1200 controls the first motor 31 and the second motor 41 to thereby move the first hand H1. The controller 1200 controls the third motor 83 and the fourth motor 61 to thereby move the second hand H2. The controller 1200 may be individually disposed to each of the hand 100 and the robot arm 1110.

### -Assembly Work-

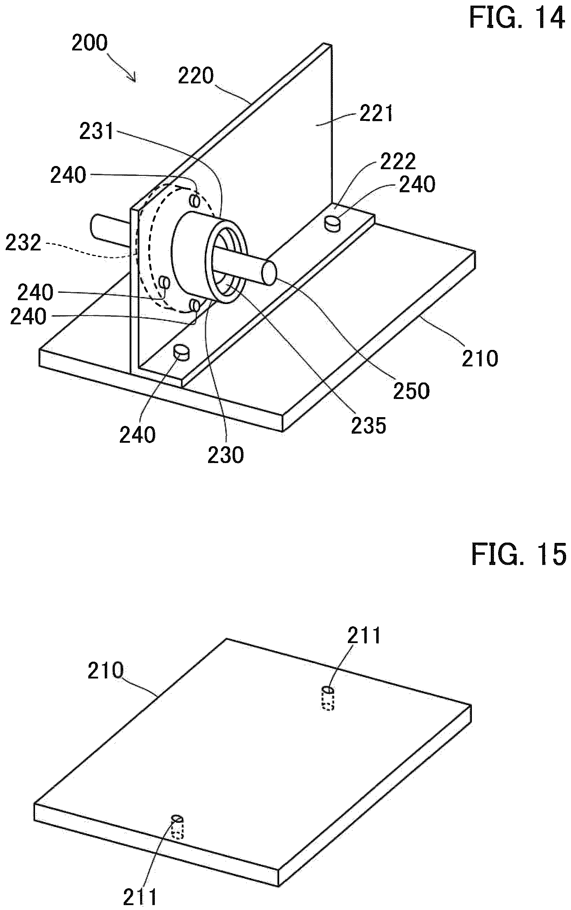

Assembly work of a bearing unit 200 by the thus-configured hand 100 will be described as an example. FIG. 14 is a perspective view illustrating a schematic configuration of the bearing unit 200. In the bearing unit 200, a bearing 235 and a bearing holder 230 are attached to an angle 220 fixed to a base plate 210, and a shaft 250 is inserted in a bearing 235. The assembly work of the bearing unit 200 includes work of placing the angle 220 on the base plate 210 (placing work), work of fastening the angle 220 to the base plate 210 with bolts 240 (first fastening work), work of inserting the bearing holder 230 into an attachment hole 224 of the angle 220 (holder inserting work), work of positioning the bearing holder 230 (positioning work), work of fastening the bearing holder 230 to the angle 220 with bolts 240 (second fastening work), and work of inserting the shaft 250 into the bearing 235 attached to the bearing holder 230 (shaft inserting work).

### -Description of Components-

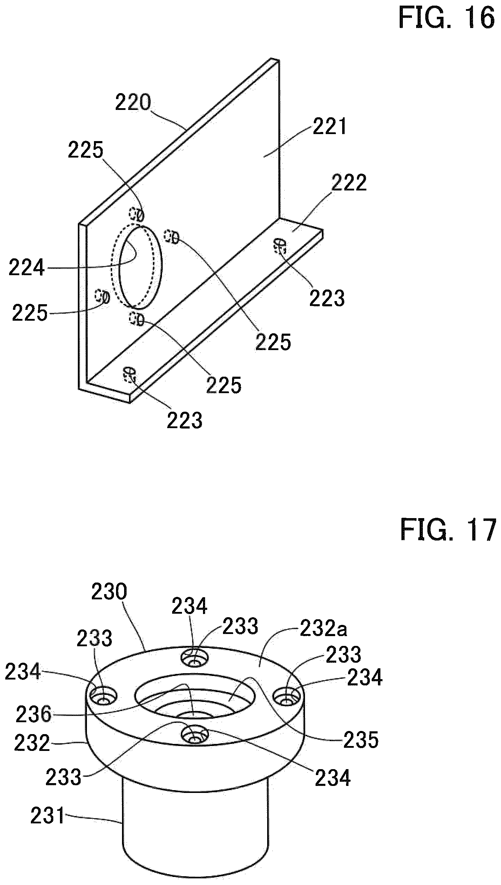

The assembly work of the bearing unit 200 includes the base plate 210, the angle 220, the bearing holder 230, the bolts 240, and the shaft 250 as components. FIG. 15 is a perspective view illustrating a schematic configuration of the base plate 210. FIG. 16 is a perspective view illustrating a schematic configuration of the angle 220. FIG. 17 is a perspective view illustrating a schematic configuration of the bearing holder 230.

The base plate 210 is a plate member, and has a rectangular shape in plan view. The base plate 210 has two screw holes 211 for fastening the angle 220 with the bolts 240. The screw holes 211 penetrate the base plate 210 in the thickness direction.

The angle 220 is a member to which the bearing holder 230 is attached. The angle 220 includes a first plate 221 and a second plate 222. The first plate 221 and the second plate 222 are connected to form a right angle. The second plate 222 has two through holes 223 associated with the screw holes 211 of the base plate 210. That is, the through holes 223 are holes in which the bolts 240 for attaching the angle 220 to the base plate 210 are inserted. The first plate 221 has the attachment hole 224 which penetrates the first plate 221 in the thickness direction and in which the bearing holder 230 is inserted.

The first plate 221 has screw holes 225 (four screw holes in this example) around the attachment hole 224. The screw holes 225 are holes for fastening the bearing holder 230 inserted in the attachment hole 224 to the angle 220 with the bolts 240. Two of the four screw holes 225 are arranged in the vertical direction, and the other two screw holes 225 are arranged in the horizontal direction. That is, the four screw holes 225 are arranged at intervals of 90 degrees in the circumferential direction of the attachment hole 224. The screw holes 225 penetrate the first plate 221 in the thickness direction of the first plate 221.

The bearing holder 230 is a component for holding the bearing 235. In this example, the bearing 235 is mounted on the inner side of the bearing holder 230 beforehand. The bearing 235 has a through hole 236 in which the shaft 250 is inserted. The bearing holder 230 includes a holder body 231 and a flange 232. The holder body 231 has a cylindrical shape. The flange 232 has an annular shape, and integrated with the outer periphery of an end portion of the holder body 231 in the axial direction. The holder body 231 is inserted in the attachment hole 224 of the angle 220. The outer diameter of the holder body 231 is approximately equal to the hole diameter of the attachment hole 224. The flange 232 has four through holes 233 associated with the screw holes 225 of the angle 220. That is, the through holes 233 are holes in which the bolts 240 for attaching the bearing holder 230 to the angle 220 are inserted. Each of the through holes 233 has a counterbore 234 that accommodates the head of an associated one of the bolts 240.

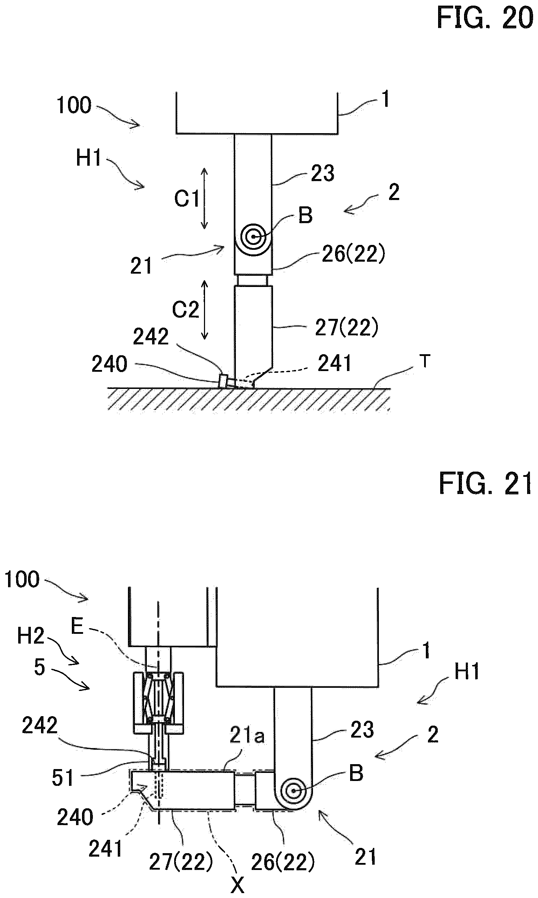

Each of the bolts 240 includes a bolt body 241 having an external thread and a columnar head 242 located at an end of the bolt body 241 (see FIG. 20 described later).

Actions of the hand 100 in the work will be hereinafter described in detail. In the following work, the controller 1200 moves the robot arm 1110 and the hand 100 in the manner described below.

### -Placing Work-

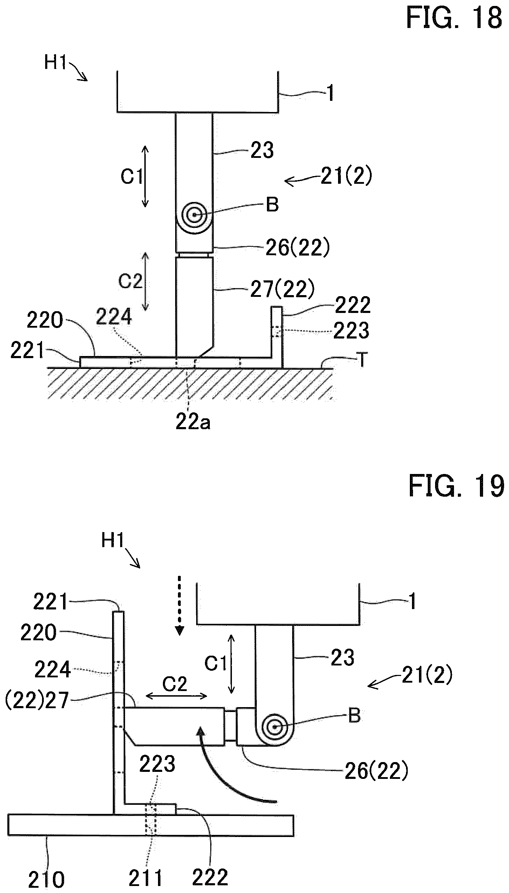

FIG. 18 is a schematic view illustrating a state where the first gripper 2 grips the angle 220. FIG. 19 is a schematic view illustrating a state where the first gripper 2 places the angle 220 on the base plate 210. In this placing work, the base plate 210 is located on a frame or the like while expanding horizontally.

First, the angle 220 on a tray T is gripped by the first gripper 2 of the first hand H1. Specifically, the angle 220 is placed on the tray T with the first plate 221 expanding horizontally and the second plate 222 expanding vertically. The robot arm 1110 moves the hand 100 so that the first gripper 2 is located at the position of the angle 220 on the tray T. At this time, the two first fingers 21 of the first gripper 2 are in the extended state and in the open state. As illustrated in FIG. 18, the first gripper 2 moves the two first fingers 21 such that the two first fingers 21 approach each other in the opening/closing directions A, and grips the angle 220 with the two first fingers 21.

Next, the first gripper 2 places the angle 220 gripped by the first gripper 2 on the base plate 210. Specifically, the first gripper 2 causes the two first fingers 21 gripping the angle 220 to bend. Specifically, the first fingers 21 bend such that the first plate 221 extends vertically and the second plate 222 is located at the bottom. Then, as illustrated in FIG. 19, the robot arm 1110 moves the hand 100 and places the angle 220 gripped by the first gripper 2 on a predetermined position of the base plate 210. Specifically, the robot arm 1110 places the angle 220 on the base plate 210 such that the axes of the through holes 223 of the angle 220 coincide with the axes of the screw holes 211 of the base plate 210.

Through the foregoing action, the placing work is completed.

### -First Fastening Work-

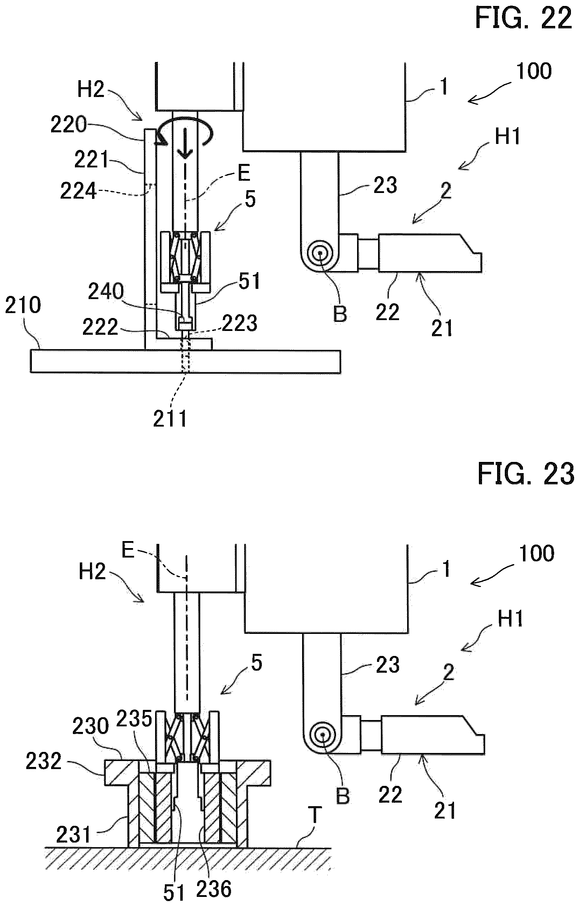

FIG. 20 is a schematic view illustrating a state where the bolt 240 is gripped by the first gripper 2. FIG. 21 is a schematic view illustrating a state where the second gripper 5 receives the bolt 240 from the first gripper 2. FIG. 22 is a schematic view illustrating a state where the second gripper 5 screws the bolt 240 into the screw hole 211.

First, the first gripper 2 of the first hand H1 grips the bolt 240 on the tray T. Specifically, the robot arm 1110 moves the hand 100 such that the first gripper 2 is located at the position of the bolt 240 on the tray T. At this time, the two first fingers 21 of the first gripper 2 are in the extended state and in the open state. The bolt 240 is located between the two first fingers 21. The first gripper 2 moves the two first fingers 21 such that the two first fingers 21 approach each other in the opening/closing directions A and, as illustrated in FIG. 20, the two first fingers 21 grip the bolt 240.

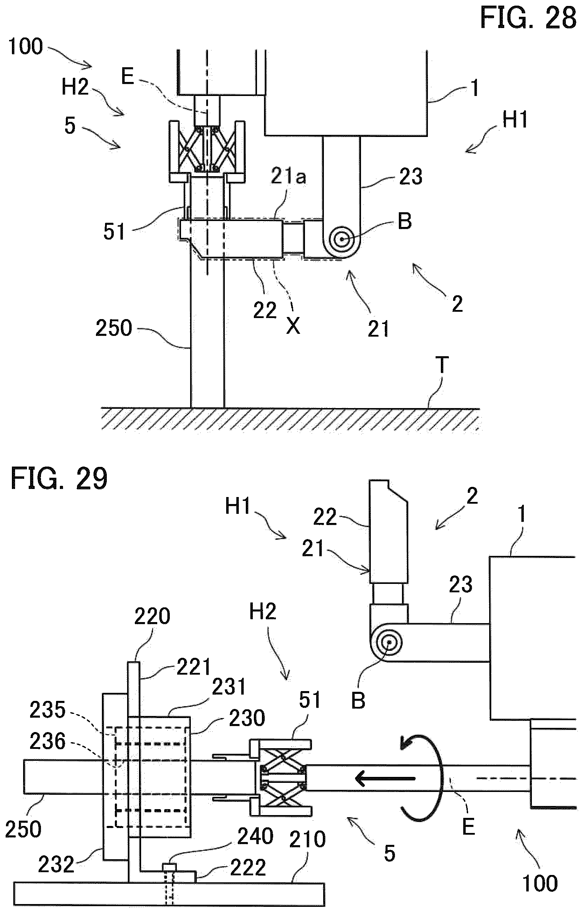

Next, the first gripper 2 delivers the bolt 240 to the second gripper 5 of the second hand H2. Specifically, the first gripper 2 causes the two first fingers 21 gripping the bolt 240 to bend. Specifically, the first gripper 2 causes the first fingers 21 to bend and moves the first part 22 to a position at which an imaginary region X defined by projecting the first part 22 in the opening/closing directions A interferes with the axis E. In FIG. 21, the imaginary region X is a region defined by projecting the first part 22 in a direction orthogonal to the drawing sheet. For easy illustration of the imaginary region X in FIG. 21, the imaginary region X is slightly larger than the first part 22 and indicated by a chain double-dashed line (the same holds for FIG. 28). As a result of moving the first part 22 to the position at which the imaginary region X interferes with the axis E, the bolt 240 is located near the axis E to which the three second fingers 51 advance or retract. Thereafter, the second hand H2 moves the second fingers 51 in the direction of the axis E such that the second fingers 51 are located at the position of the bolt 240 gripped by the first fingers 21. At this time, the three second fingers 51 are in the open state. The second hand H2 moves the three second fingers 51 toward each other and, as illustrated in FIG. 21, grips the bolt 240 with the three second fingers 51. The three second fingers 51 grip the head 242 of the bolt 240 with the axis of the bolt body 241 of the bolt 240 coinciding with the axis E.

Subsequently, the second hand H2 screws the bolt 240 into the screw hole 211. Specifically, the robot arm 1110 moves the hand 100 such that the bolt 240 gripped by the second gripper 5 is located above the screw hole 211 of the base plate 210, that is, above the through hole 223 of the angle 220. At this time, the robot arm 1110 makes the axis of the bolt body 241 substantially coincide with the axis of the through hole 223. The second hand H2 moves the second fingers 51 downward by the straight-moving actuator 6 while rotating the second fingers 51 by the rotation actuator 7. Accordingly, as illustrated in FIG. 22, the bolt 240 enters the through hole 223 and is further screwed into the screw hole 211. Lastly, the second hand H2 screws the bolt 240 into the screw hole 211 until the bolt 240 fixes the second plate 222 to the base plate 210.

This series of actions is performed on two screw holes 211 so that the angle 220 is finally fastened to the base plate 210 with the bolts.

Through the foregoing action, the first fastening work is completed.

### -Holder Inserting Work-

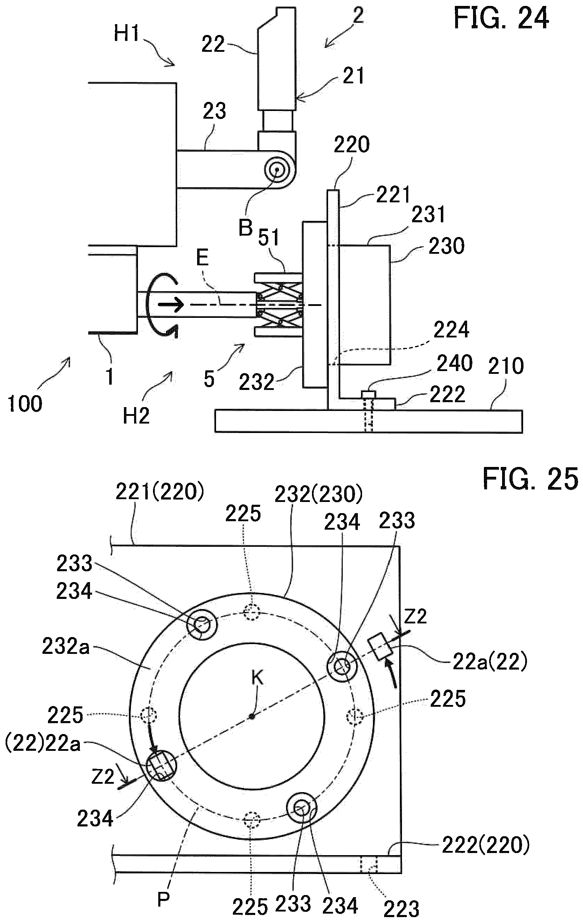

FIG. 23 is a schematic view illustrating a state where the second gripper 5 grips the bearing holder 230. FIG. 24 is a schematic view illustrating a state where the second gripper 5 inserts the bearing holder 230 into the angle 220.

First, the second gripper 5 of the second hand H2 grips the bearing holder 230 on the tray T. Specifically, the robot arm 1110 moves the hand 100 such that the second gripper 5 is located at the position of the bearing holder 230 on the tray T. The bearing holder 230 is placed tray T with the flange 232 located above the holder body 231. The three second fingers 51 of the second gripper 5 in the closed state are inserted into the through hole 236 of the bearing 235 in the holder body 231. The second hand H2 opens the three second fingers 51 and, as illustrated in FIG. 23, brings the three second fingers 51 into contact with the inner peripheral surface of the through hole 236. In this manner, the second gripper 5 grips the bearing holder 230 with the three second fingers 51.

Thereafter, the second hand H2 fits the bearing holder 230 in the attachment hole 224 of the angle 220. Specifically, the robot arm 1110 moves the hand 100 such that the bearing holder 230 gripped by the second gripper 5 is located at the side of the attachment hole 224 of the angle 220. At this time, the robot arm 1110 makes the axis E of the second gripper 5, that is, the axis of the bearing holder 230, substantially coincide with the axis of the attachment hole 224. Then, the robot arm 1110 moves the hand 100 such that the holder body 231 of the bearing holder 230 approaches the attachment hole 224. Subsequently, the second hand H2 moves the second fingers 51 straight in the direction of the axis E by the straight-moving actuator 6 while rotating the second fingers 51 by the rotation actuator 7. Accordingly, the holder body 231 gradually enters the attachment hole 224. Finally, as illustrated in FIG. 24, the second hand H2 inserts the bearing holder 230 into the attachment hole 224 until the flange 232 of the bearing holder 230 contacts the first plate 221.

Through the foregoing action, the inserting work is finished.

### -Positioning Work-

FIG. 25 is a view illustrating a state of the bearing holder 230 inserted in the angle 220 when seen from an end surface 232a.

First, the hand 100 pushes the first gripper 2 against a predetermined position on the end surface 232a of the flange 232 of the bearing holder 230. The end surface 232a of the flange 232 herein is a surface of an end portion of the flange 232 in the direction of an axis k of the bearing holder 230. Specifically, the robot arm 1110 moves the hand 100 such that the first gripper 2 is located at a side of the end surface 232a of the flange 232. At this time, the two first fingers 21 of the first gripper 2 are in the extended state and in the open state. One of the two first fingers 21 is moved by the opening/closing actuators 3 to a position corresponding to the predetermined position in the opening/closing directions A described above. Then, the robot arm 1110 moves the hand 100 toward the flange 232, and pushes one of the first fingers 21 against a predetermined position on the end surface 232a.

Thereafter, the first gripper 2 of the first hand H1 rotates the bearing holder 230 for positioning. Specifically, the robot arm 1110 rotates the hand 100 such that one of the first fingers 21 of the first gripper 2 rotates about the axis K of the bearing holder 230. Then, as illustrated in FIG. 25, when the first finger 21 pushed against the end surface 232a rotates to the position of the through hole 233, this first finger 21 enters (is engaged with) the counterbore 234 of the through hole 233. Subsequently, the robot arm 1110 further rotates the hand 100 such that the axis of the through hole 233 of the flange 232 coincides with the axis of the screw hole 225 of the angle 220. In this manner, the bearing holder 230 is positioned at a predetermined rotation position. FIG. 25 shows distal ends of the first fingers 21 (i.e., the distal ends 22a of the first parts 22). FIG. 25 does not show the bearing 235.

Through the foregoing action, the positioning work is completed.

### -Second Fastening Work-

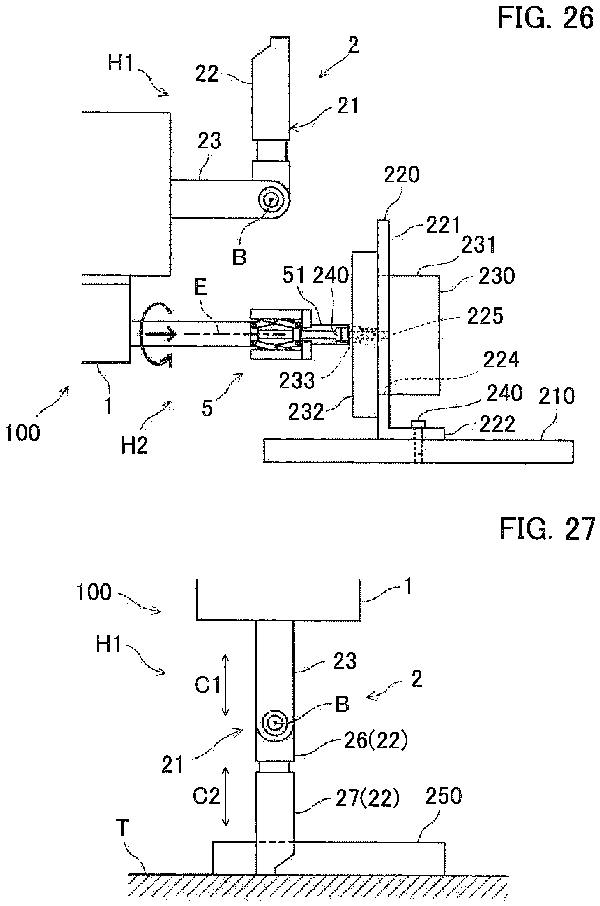

FIG. 26 is a schematic view illustrating a state where the second gripper 5 screws the bolt 240 into the screw hole 225 of the angle 220.

First, the first gripper 2 of the first hand H1 grips the bolt 240 on the tray T. Next, the first gripper 2 delivers the bolt 240 to the second gripper 5 of the second hand H2. These actions are similar to those in the first fastening work.

Subsequently, the second hand H2 screws the bolt 240 into the screw hole 225 of the angle 220. Specifically, the robot arm 1110 moves the hand 100 such that the bolt 240 gripped by the second gripper 5 is located at a side of the screw hole 225 of the angle 220, that is, the through hole 233 of the bearing holder 230. At this time, the robot arm 1110 makes the axis E of the second gripper 5, that is, the axis of the bolt 240, substantially coincide with the axis of the screw hole 225. Then, the robot arm 1110 moves the hand 100 such that the bolt 240 is slightly inserted in the through hole 233. Subsequently, the second hand H2 moves the second fingers 51 straight in the direction of the axis E by the straight-moving actuator 6 while rotating the second fingers 51 by the rotation actuator 7. Accordingly, as illustrated in FIG. 26, the bolt 240 enters the through hole 233, and is further screwed into the screw hole 225. Lastly, the second hand H2 screws the bolt 240 into the screw hole 225 until the bolt 240 fixes the flange 232 of the bearing holder 230 to the angle 220.

This series of actions is performed on the four screw holes 225 so that the bearing holder 230 is finally fastened to the angle 220 with the bolts.

Through the foregoing action, the second fastening work is completed.

### -Shaft Inserting Work-

FIG. 27 is a schematic view illustrating a state where the shaft 250 is gripped by the first gripper 2. FIG. 28 is a schematic view illustrating a state where the second gripper 5 receives the shaft 250 from the first gripper 2. FIG. 29 is a schematic view illustrating a state where the second gripper 5 inserts the shaft 250 into the bearing 235 of the bearing holder 230.

First, the first gripper 2 of the first hand H1 grips the shaft 250 on the tray T. Specifically, the robot arm 1110 moves the hand 100 such that the first gripper 2 is located at the position of the shaft 250 on the tray T. At this time, the two first fingers 21 of the first gripper 2 are in the extended state and in the open. The shaft 250 is located between the two first fingers 21. The first gripper 2 moves the two first fingers 21 such that the two first fingers 21 approach each other in the opening/closing directions A and, as illustrated in FIG. 27, the two first fingers 21 grip the shaft 250.

Next, the first gripper 2 delivers the shaft 250 to the second gripper 5 of the second hand H2. Specifically, the first gripper 2 causes the two first fingers 21 gripping the shaft 250 to bend. Specifically, the first gripper 2 causes the first fingers 21 to bend and moves the first part 22 to a position at which the imaginary region X of the first part 22 interferes with the axis E. As a result, the shaft 250 is located near the axis E to which the three fingers 51 advance or retract. Thereafter, the second hand H2 moves the second fingers 51 in the direction of the axis E such that the second fingers 51 are located at positions corresponding to the shaft 250 gripped by the first fingers 21. At this time, the three second fingers 51 are in the open state. The second hand H2 moves the three second fingers 51 such that the three second fingers 51 approach each other and, as illustrated in FIG. 28, grips the shaft 250 with the three second fingers 51. The three second fingers 51 grip an end portion of the shaft 250 with the axis of the shaft 250 coinciding with the axis E.

Next, the second gripper 5 inserts the shaft 250 into the bearing 235 of the bearing holder 230. Specifically, the robot arm 1110 moves the hand 100 such that the shaft 250 gripped by the second gripper 5 is located at a side of the bearing holder 230. At this time, the robot arm 1110 makes the axis E of the second gripper 5, that is, the axis of the shaft 250, substantially coincide with the axis of the screw hole 236 of the bearing 235. Then, the robot arm 1110 moves the hand 100 such that the shaft 250 is slightly pushed against a vicinity of the through hole 236 of the bearing 235. Subsequently, the second hand H2 moves the second fingers 51 straight in the direction of the axis E by the straight-moving actuator 6 while rotating the second fingers 51 by the rotation actuator 7. Accordingly, the shaft 250 gradually enters the through hole 236. At this time, the second hand H2 releases gripping of the shaft 250 by the second gripper 5 and pushes the shaft 250 in the direction of the axis E by the pushing block 91 of the push actuator 9 to thereby insert the shaft 250 in the through hole 236 in some cases. Lastly, the second hand H2 stops insertion of the shaft 250 at the time when the shaft 250 is inserted in the through hole 236 to a predetermined amount.

Through the foregoing action, the shaft inserting work is completed, and assembly work of the bearing unit 200 is completed.

In this assembly work of the bearing unit 200, the first hand H1 can absorb shock on the first fingers 21 from the tray T.

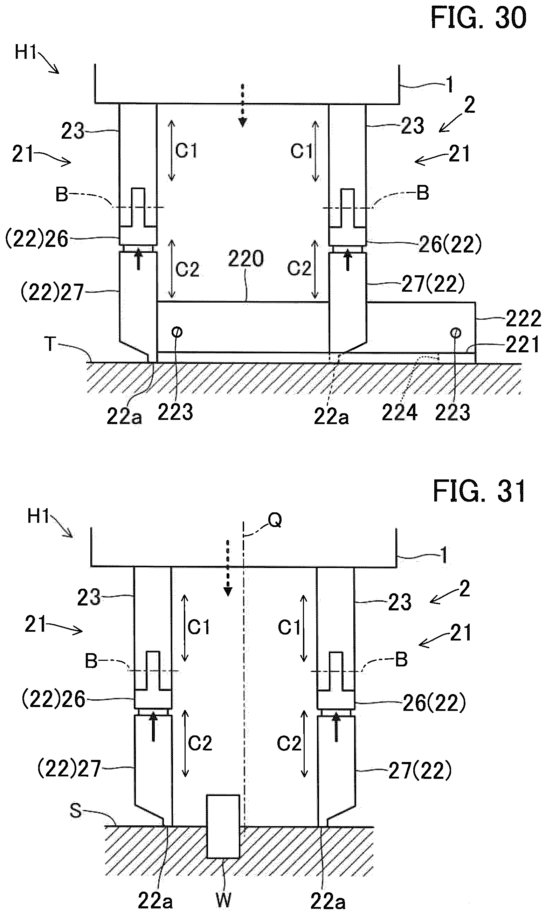

Specifically, in the placing work described above, the robot arm 1110 moves the first hand H1 to a position above the angle 220 placed on the tray T. Subsequently, as illustrated in FIG. 30, the robot arm 1110 lowers the first hand H1 and brings the first fingers 21 of the first gripper 2 into contact with the tray T. At this time, the three first fingers 21 are in the extended state. When the first fingers 21 contact the tray T, the movers 27 of the first parts 22 of the first fingers 21 move toward the fixers 26 in the extension directions C2 (see solid arrows in FIG. 30).

Accordingly, shock caused by contact of the first fingers 21 with the tray T is absorbed by the damper 25. Accordingly, collision of the first fingers 21 with the tray T is allowed to some degree, and thus, the first hand H1 can be moved to the position of the angle 220 more quickly. In addition, since shock with the tray T can be absorbed, the first hand H1 does not need to be stopped exactly at the position of the tray T, thereby eliminating the necessity for detecting the position of the tray T accurately.

In the state where the first fingers 21 are in contact with the tray T, the center Q of the movable range of the first fingers 21 (hereinafter referred to simply as a "center Q of the movable range") may be displaced from a position of the angle 220 to be gripped. That is, the center of the interval between the two first fingers 21 (hereinafter also referred to as the "center of two first fingers 21") is displaced from the workpiece. In this case, the first hand H1 can eccentrically grip the workpiece.

The case of eccentrically gripping a workpiece W having a simple shape for easy description will now be described with reference to FIGS. 31 through 33. In this example, the workpiece W is placed on a placing table S while being restricted in horizontal movement.

As illustrated in FIG. 31, in a state where two first fingers 21 are in contact with the placing table S, the two first fingers 21 are located outside the workpiece W. At this time, the movers 27 of the two first fingers 21 have been moved toward the fixers 26. The center Q of the movable range is displaced from the workpiece W. That is, the workpiece W is eccentric to one of the first fingers 21.

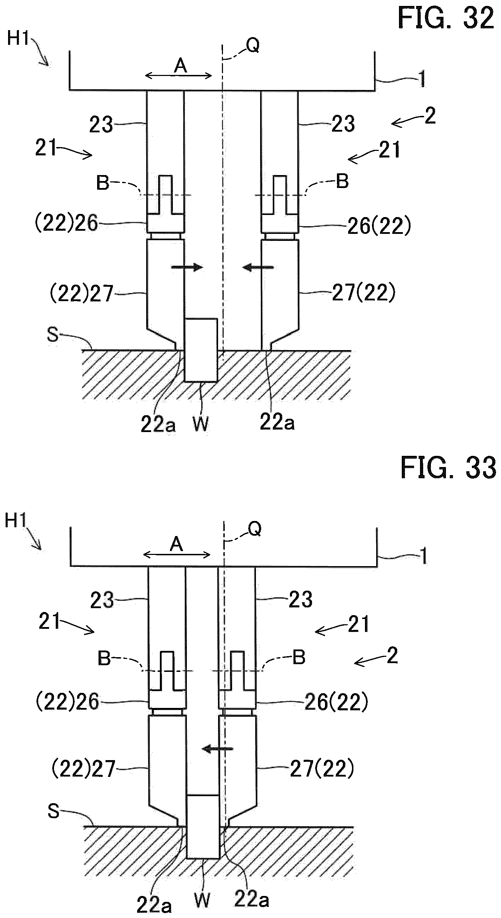

As illustrated in FIG. 32, in this state, the two first fingers 21 are moved by the opening/closing actuators 3. Specifically, the controller 1200 controls the two first motors 31 so that the two first fingers 21 thereby move toward each other in the opening/closing directions A. That is, each of the two first fingers 21 moves toward the workpiece W. At this time, resistances to movements of the two first fingers 21 are approximately equal and are small. Thus, a small rotation torque is needed for each first motor 31. Thereafter, one of the two first fingers 21 contacts the workpiece W first. Accordingly, a rotation torque of the first motor 31 associated with the first finger 21 in contact with the workpiece W increases. Subsequently, when the rotation torque of the first motor 31 associated with the first finger 21 in contact with the workpiece W increases to a predetermined value, the controller 1200 stops this first motor 31. In this manner, the first finger 21 that contacted the workpiece W first is stopped.

Even when the first finger 21 that contacted the workpiece W first is stopped, the other first finger 21 continues to move. That is, since the rotation torque of the first motor 31 associated with the first finger 21 not in contact with the workpiece W is still small, the controller 1200 allows this first motor 31 to continue to drive. Subsequently, as illustrated in FIG. 33, the other first finger 21 contacts the workpiece W and stops. In this example, the other first finger 21 moves to a position across the center Q of the movable range. In this manner, the workpiece W is eccentrically gripped. Then, although not shown, based on encoder outputs of the first motors 31, the controller 1200 moves the two first fingers 21 gripping the workpiece W to the center Q of the movable range. Even in the case where the center Q of the movable range is displaced from the workpiece W as described above, the opening/closing actuators 3 move the two first fingers 21 independently of each other, and thereby, the workpiece W can be gripped appropriately. In addition, since such eccentric gripping is achieved, the assembly work described above does not need accurate position detection of the angle 220 as a workpiece.

In the manner described above, the two first fingers 21 are configured such that one of the first fingers 21 can move toward the other first finger 21 across the center Q of the movable range (the center of the first hand H1). Thus, even a small workpiece W as described above can be eccentrically gripped appropriately.

In the assembly work of the bearing unit 200 described above, the first hand H1 can change the posture and position of the workpiece gripped by the first hand H1.

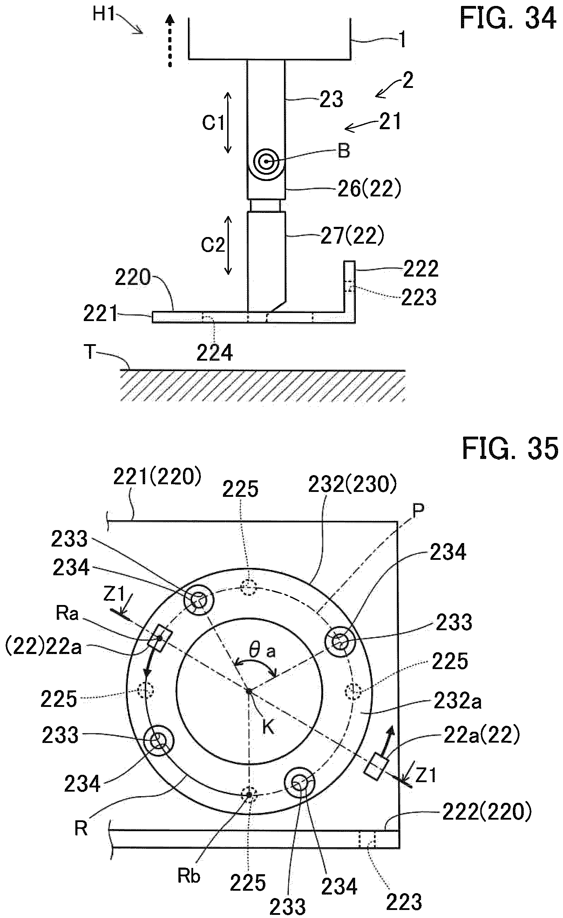

Specifically, in the placing work described above, when the first gripper 2 grips the angle 220, the robot arm 1110 moves the first hand H1 upward. In this state, as illustrated in FIG. 34, the two first fingers 21 are in the extended state, and the first plate 221 of the angle 220 extends horizontally. When the first hand H1 moves upward, the first parts 22 of the first fingers 21 return to the normal state. That is, the mover 27 moves downward by extension of the spring 29.

Then, the first gripper 2 causes the two first fingers 21 gripping the angle 220 to bend to a predetermined direction (see FIG. 19). That is, the first gripper 2 causes the two first fingers 21 to bend such that the angle 220 gripped by the first fingers 21 is in a predetermined posture. Specifically, the posture of the angle 220 is changed such that the first plate 221 extends vertically and the second plate 222 is located at the bottom. In the manner described above, the first hand H1 can change the posture of the workpiece and move the workpiece by bending the two first fingers 21 gripping the workpiece. Thus, the posture and position of the workpiece gripped by the first fingers 21 can be changed without moving the robot arm 1110.

In particular, in the assembly work of the bearing unit 200 described above, the first hand H1 can deliver the workpiece gripped by the first hand H1 to the second gripper 5 of the second hand H2.

Specifically, in the first fastening work described above, the first gripper 2 delivers the bolt 240 to the second gripper 5. Specifically, the bending actuator 4 of the first gripper 2 causes the two first fingers 21 gripping the bolts 240 to bend and moves the bolt 240 to a predetermined delivery position. In this example, the predetermined delivery position is a position on the axis E along which the three second fingers 51 of the second gripper 5 advance or retract. That is, the two first fingers 21 bend such that the bolt 240 gripped by the first fingers 21 is located near the axis E. Thereafter, the second gripper 5 grips the bolt 240 with the three second fingers 51. In this manner, the delivery action of the bolt 240 (workpiece) from the first gripper 2 to the second gripper 5 is performed. A delivery action of the bolt 240 in the second fastening work and a delivery action of the shaft 250 in the shaft inserting work are similar to the actions in the first fastening work.

In the assembly work of the bearing unit 200 described above, the first hand H1 can position the bearing holder 230 without detecting the positions of the screw holes 225 and the through holes 233.

Specifically, in the positioning work described above, the controller 1200 rotates (moves) the bearing holder 230 in such a manner that the first fingers 21 are caused to slide along the end surface 232a of the flange 232 with the distal ends of the first fingers 21 pushed against the end surface 232a of the flange 232 of the bearing holder 230 to be retracted, and the first fingers 21 are engaged with the counterbores 234 formed in the flange 232 of the bearing holder 230 and recessed from the end surface 232a and rotated (moved).

That is, in the positioning work described above, the controller 1200 performs a control method of the first hand H1 (hand 100) that will be described below. This control method includes a pushing action, an engaging action, and a moving action. The pushing action is an action in which the distal ends 22a of the first fingers 21 are pushed against the end surface 232a of the flange 232 and retracted. The engaging action is an action in which the first fingers 21 retracted by the pushing action are caused to slide along the end surface 232a of the flange 232 to be thereby engaged with the counterbores 234 formed in the flange 232 of the bearing holder 230 and recessed from the end surface 232a. The moving action is an action in which the first fingers 21 engaged with the counterbores 234 by the engaging action are rotated (moved) to thereby rotate (move) the bearing holder 230. The bearing holder 230 is an example of a workpiece. The end surface 232a is an example of a surface. The counterbore 234 is an example of an engager.

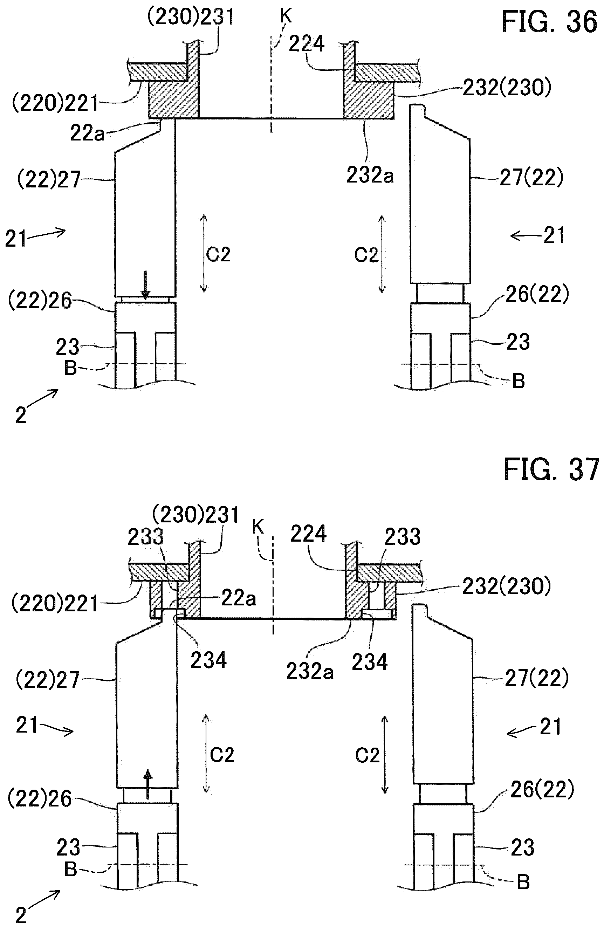

More specifically, in the pushing action, as illustrated in FIGS. 35 and 36, the robot arm 1110 pushes the distal end 22a of one of the first fingers 21 against a predetermined position (start point Ra of a movement path R described later) on the end surface 232a of the flange 232. At this time, in the hand 100, one of the first fingers 21 has been moved by the opening/closing actuators 3 to a position corresponding to the predetermined position (the start point Ra of the movement path R) in the opening/closing directions A. The other first finger 21 not pushed against the end surface 232a is located at the outer side of the flange 232. The distal ends 22a of the first fingers 21 are more slender than the other part of the movers 27, and are small enough to enter the counterbores 234. In a manner similar to FIG. 25, FIG. 35 and FIG. 38 described later show distal ends of the first fingers 21 (i.e., the distal ends 22a of the first parts 22). FIGS. 35, 36, and 37 through 39 described later do not show the bearing 235, in a manner similar to FIG. 25.

In the controller 1200, a predetermined movement path R in which one of the first fingers 21 moves is defined on the end surface 232a of the flange 232. In this example, as illustrated in FIG. 35, the movement path R is defined on a pitch circle P passing four through holes 233 (counterbores 234). Specifically, the movement path R is a path formed by rotating counterclockwise from the 10 o'clock angular position to the 6 o'clock angular position on the pitch circle P. That is, the start point Ra of the movement path R is set at the 10 o'clock angular position on the pitch circle P. The end point Rb of the movement path R is set at the 6 o'clock angular position on the pitch circle P. Thus, in the pushing action, one of the first fingers 21 is pushed against the start point Ra of the movement path R. That is, in the one of the first fingers 21, the distal end 22a of the first part 22 is pushed against the end surface 232a. When the one of the first fingers 21 is pushed 0against the end surface 232a, the spring 29 of the damper 25 is compressed so that the mover 27 is retracted (moved) toward the fixer 26. The mover 27 of the other first finger 21 is in a normal state. Through the foregoing action, the pushing action is completed. At this time, the one of the first fingers 21 is not inserted (is not engaged) in any of the counterbores 234.

In the next engaging action, the robot arm 1110 rotates the hand 100 to thereby rotate the two first fingers 21 of the first gripper 2. At this time, the rotation center of the hand 100 coincides with the axis K of the flange 232, that is, the center of the pitch circle P of the four through holes 233. In FIG. 35, the hand 100 rotates counterclockwise about the axis K. Thus, the one of the first finger 21 also moves toward the end point Rb on the movement path R in the pitch circle P. Then, as illustrated in FIGS. 25 and 37, when the one of the first fingers 21 rotates (moves) to the position of the through hole 233, this first finger 21 enters the counterbore 234 of the through hole 233 by extension of the spring 29. That is, in the one of the first fingers 21, the mover 27 moves toward the through hole 233. Accordingly, this first finger 21 is engaged with the counterbore 234. In this manner, when the one of the first fingers 21 is engaged with the counterbore 234, the bearing holder 230 enters a state to be rotated together with the first finger 21. Through the foregoing action, the engaging action is finished.

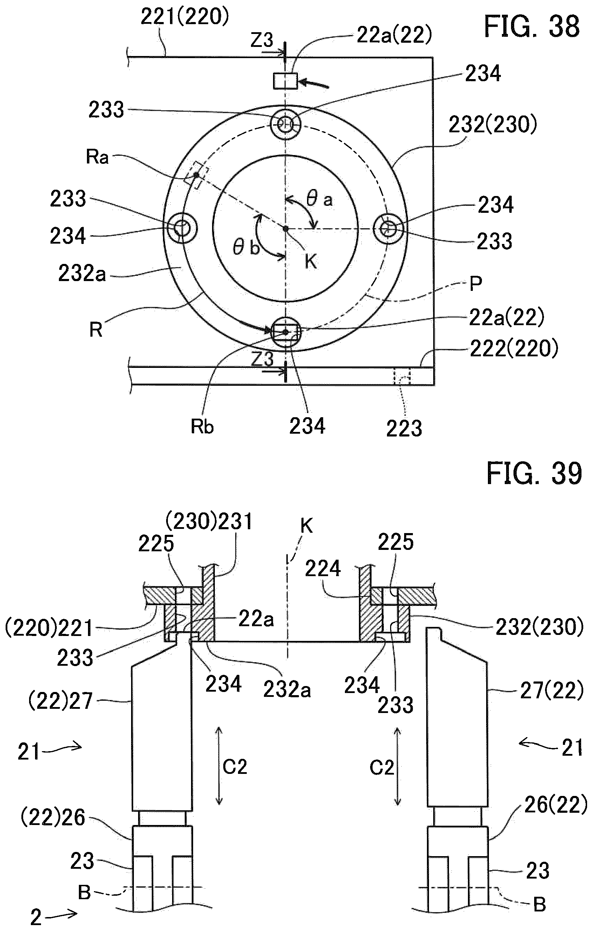

Subsequently, in the moving action, the robot arm 1110 further rotates the hand 100. Then, as illustrated in FIG. 38, with rotation of the two first fingers 21, the bearing holder 230 also rotates counterclockwise. That is, the through hole 233 (counterbore 234) rotates together with the one of the first fingers 21. Then, when this first finger 21 rotates (moves) to the end point Rb, that is, when the one of the first fingers 21 rotates by a rotation angle θb corresponding to the movement path R in the pitch circle P, the controller 1200 stops the rotation of the hand 100. Through the foregoing action, the moving action is finished. In this example, the one of the first fingers 21 keeps moving without stopping from the start point Ra to the end point Rb. That is, the one of the first fingers 21 is engaged with the counterbore 234 in the middle of movement. As described above, without detecting engagement of the one of the first fingers 21 with the counterbore 234, the bearing holder 230 can be rotated together with this first finger 21.

The predetermined rotation angle θb is larger than a pitch angle θa of the through holes 233 (counterbores 234). The pitch angle θa is also a pitch angle of the screw holes 225 of the angle 220. By setting the rotation angle θb in the manner described above, when one of the first fingers 21 is pushed against the end surface 232a, irrespective of an angle difference between this first finger 21 and the through hole 233 (counterbore 234), the first finger 21 can be moved to a position of any one of the through holes 233 (counterbores 234) while the first finger 21 rotates by a predetermined rotation angle θb.

The predetermined rotation angle θb is set such that one of the first fingers 21 rotates (moves) to a predetermined position. Specifically, this predetermined position is a position of any one of the screw holes 225 in the angle 220. In this example, the position of a lower one of the two screw holes 225 aligned vertically is set at the predetermined position. That is, the predetermined position is a position at which the center of the through hole 233 associated with the counterbore 234 where one of the first finger 21 has entered coincides with the center of the screw hole 225. In this example, since one of the first fingers 21 is pushed against the 10 o'clock angular position in the pitch circle P, the predetermined rotation angle θb is 120°.

By rotating the first finger 21 by the thus-set rotation angle θb, the bearing holder 230 is rotated to the position at which the center of the through hole 233 (counterbore 234) coincides with the axis of the screw hole 225 as illustrated in FIG. 39. Accordingly, the bearing holder 230 is positioned at a predetermined angular position. As described above, the bearing holder 230 can be positioned without detecting the positions of the through holes 233 and the screw holes 225.

In the manner described above, the hand 100 includes: the base 1; the two first fingers 21 that extend from the base 1 and are bendable; the opening/closing actuator 3 that is disposed in the base 1 and moves the two first fingers 21 in the predetermined opening/closing direction A so that the two first fingers 21 grip a workpiece; and the bending actuator 4 that is disposed in the base 1 and causes the two first fingers 21 to bend. Each of the first fingers 21 includes the second part 23 extending from the base 1, and the first part 22 coupled to the second part 23 to be rotatable about the rotation axis B parallel to the opening/closing direction A, the first part 22 being bendable with respect to the second part 23. The first part 22 includes the damper 25 that causes the first part 22 to expand and contract in the extension direction C2 of the first part 22.

A robot 1100 includes the hand 100 and a robot arm 1110 to which the hand 100 is coupled.

With this configuration, since each of the two first fingers 21 includes the damper 25, the first fingers 21 exhibit a damping function independently of each other. With the bending actuator 4, a workpiece can also be moved or changed in a gripping posture by bending the first fingers 21. Accordingly, the amount of movement of the robot arm 1110 can be reduced. The robot arm 1110 needs a larger moving space than the hand 100, and thus, has a higher risk of interference with other equipment and other devices. Reduction of the amount of movement of the robot arm 1110 eases control of movement of the robot arm 1110 accordingly. In addition, reduction of the amount of movement of the robot arm 1110 can reduce electric power for moving the robot arm 1110. The reduction of the amount of movement of the robot arm 1110 can also shorten the working time.

Since the damper 25 is disposed not in the second part 23 but in the first part 22, the configuration of the bending actuator 4 can be simplified. Specifically, since the second part 23 does not include the damper 25, the second part 23 does not perform an extension and contraction action. On the other hand, in the bending actuator 4, the power transmitter such as the timing belt 45 for rotating the first part 22 is disposed through the second part 23. Design of such a power transmitter does not need consideration of an extension and contraction action of the second part 23, and thus, complication of the configuration of the power transmitter and other devices, and also the bending actuator 4, can be avoided.

If the damper 25 is disposed in the second part 23 or closer to the base 1 than the second part 23, the damping direction does not change irrespective of bending of the first fingers 21. In the case where the damper 25 is disposed in the first part 22, the damping direction changes depending on bending of the fingers. Although the direction on which shock is exerted varies depending on situations of application of the hand, the shock can be appropriately absorbed in some cases by changing the damping direction in conformity with the first part 22.

In the manner described above, the hand 100 can perform various actions, and thus, flexibility in movement of the hand 100 can be enhanced.

In the robot 1100, since the amount of movement of the robot arm 1110 can be reduced, the robot 1100 can be easily controlled.

The robot system 1000 includes the hand 100 and the controller 1200 that controls the hand 100. The controller 1200 performs a pushing action of pushing the distal end 22a of the first part 22 against the end surface 232a of the flange 232 of the bearing holder 230 (surface of a workpiece) so that the first part 22 is retracted, an engaging action of causing the distal end 22a of the first part 22 retracted by the pushing action to slide along the end surface 232a to thereby engage the first part 22 with the counterbore 234 (engager) disposed in the flange 232 and recessed from the end surface 232a, and a moving action of moving the first part 22 engaged by the engaging action to thereby move the bearing holder 230.

A control method for the hand 100 includes: pushing the distal end 22a of the first part 22 against the end surface 232a of the flange 232 of the bearing holder 230 (surface of a workpiece) so that the first part 22 is retracted; causing the retracted distal end 22a of the first part 22 to slide along the end surface 232a to thereby engage the first part 22 with the counterbore 234 (engager) disposed in the flange 232 of the bearing holder 230 and recessed from the end surface 232a; and rotating (moving) the first part 22 engaged with the counterbore 234 to thereby rotate (move) the bearing holder 230.

In this configuration, since the first part 22 includes the damper 25, the first part 22 is retracted by pushing the first part 22 against the end surface 232a. Then, the retracted first part 22 is caused to slide on the end surface 232a to a position of the counterbore 234. Since the counterbore 234 is recessed from the end surface 232a, the retracted first part 22 is extended by the damper 25 toward the counterbore 234 to be engaged with the counterbore 234. Thereafter, the first part 22 engaged with the counterbore 234 is moved so that the bearing holder 230 is thereby moved. In the manner described above, the damper 25 allows the first part 22 to be engaged with the counterbore 234 automatically to thereby move the bearing holder 230. This makes it possible to achieve the method for easily moving the workpiece (bearing holder 230) without gripping the workpiece with the two first fingers 21.

The rotation angle θb of the first part 22 is larger than the pitch angle θa of the through holes 233 so that the first fingers 21 can be thereby reliably engaged with the through holes 233 (counterbores 234) while the first fingers 21 rotate by the rotation angle θb. Since the moving action is performed after the engaging action, the bearing holder 230 can be rotated to a predetermined position by setting the rotation angle θb at a value at which the first fingers 21 rotate (move) to a predetermined position. By setting the rotation angle θb of the first fingers 21 as described above, the bearing holder 230 can be positioned without detecting the positions of the through holes 233, the screw holes 225, and the first fingers 21.

In the hand 100, the two first fingers 21 move independently of each other in the opening/closing directions A.

In the configuration described above, since the two first fingers 21 are movable independently of each other, eccentric gripping can be achieved. That is, a workpiece can be gripped at a position eccentric from the center (center Q of the movable range) by adjusting the amount of movement of each of the two first fingers 21 in accordance with the position of the workpiece. Thus, even in the case where the center of the interval between the two first fingers 21 is deviated from the center of the workpiece, the workpiece can be appropriately gripped. Since such eccentric gripping is enabled, it is unnecessary to detect the position of the workpiece accurately.

In the hand 100, the bending actuator 4 causes the two first fingers 21 gripping a workpiece (the bolts 240 or the shaft 250) to bend so that the workpiece is moved to a predetermined delivery position of the workpiece.

With the configuration described above, the workpiece gripped by the two first fingers 21 can be moved to the delivery position by bending the two first fingers 21. Accordingly, the amount of movement of the robot arm 1110 can be reduced.

In the hand 100, the first part 22 includes the fixer 26 rotatably coupled to the second part 23, and the mover 27 that is coupled to the fixer 26 through the damper 25, the first part is extended or contracted by movement of the mover in the extension direction C2. The damper 25 includes the ball spline 28 (guide) and the spring 29 (elastic member), the ball spline 28 includes a roller that guides the mover 27 to the extension direction C2 by rolling, and the spring 29 (elastic member) elastically supports the mover 27.

With the configuration described above, even in a state where a gripping force is exerted on the first part 22 in the opening/closing directions A orthogonal to the extension directions C2, the first part 22 can be smoothly extended or contracted in the extension directions C2. Thus, the first fingers 21 gripping the workpiece W can obtain a damping function in the extension directions C2. The use of the ball spline 28 prevents the mover 27 from rotating about the extension directions C2 (i.e., about the axis of the ball spline 28). Thus, the surface gripping the workpiece W and the support surface 21a can be maintained in the same orientation in the mover 27 so that the gripping action and the delivery action of the workpiece W can be performed with stability.

### OTHER EMBODIMENTS

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the embodiment described above may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

The first hand H1 according to the embodiment described above is not limited to the actions described above, and can perform the following actions.

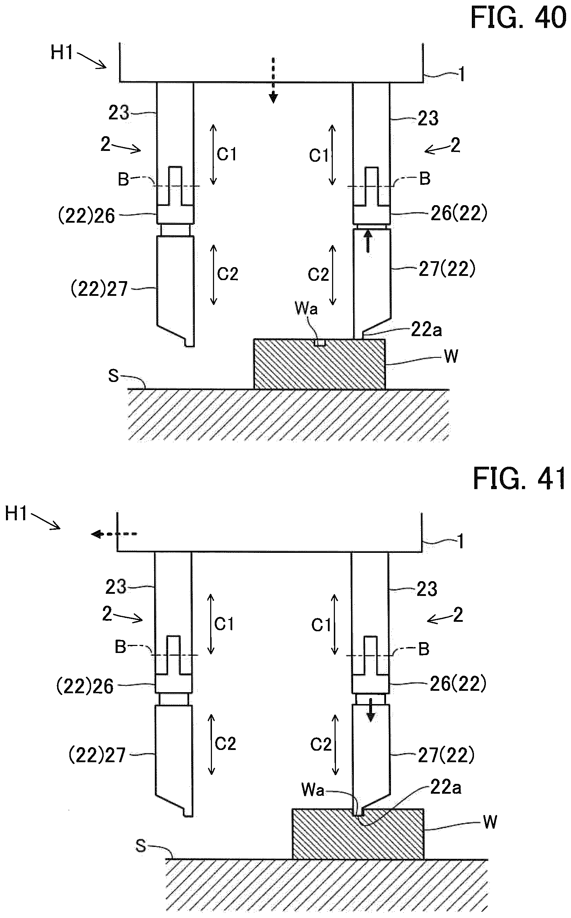

For example, the controller 1200 can cause the workpiece W on the placing table S to slide and move to a predetermined position by the first hand H1. In the manner similar to the embodiment described above, the controller 1200 causes the first hand H1 to perform a pushing action, an engaging action, and a moving action. In the pushing action, as illustrated in FIG. 40, the distal end of one of the two first fingers 21 is pushed against the upper surface (surface) of the workpiece W. The other first finger 21 not pushed against the workpiece W is located at the outer side of the workpiece W. In this example, one of the first fingers 21 pushed against the workpiece W will be referred to as one first finger 21, and the other first finger 21 not pushed against the workpiece W will be referred to as the other first finger 21. Specifically, in one first finger 21, the distal end of the mover 27 is pushed against the end surface 232a. In this state, the mover 27 is retracted toward the fixer 26. The mover 27 of the other first finger 21 is in a normal state. Through the foregoing action, the pushing action is finished.

In the next engaging action, the first hand H1 moves to a direction parallel to the placing table S, and the two first fingers 21 move to the same direction accordingly. At this time, one first finger 21 slides on the upper surface of the workpiece W. More specifically, the first hand H1 moves such that one first finger 21 slides toward an engager Wa disposed on the upper surface of the workpiece W. The engager Wa is recessed from the upper surface of the workpiece W. Then, as illustrated in FIG. 41, when one first finger 21 moves to the position of the engager Wa, this first finger 21 is extended by the spring 29 and enters the engager Wa. That is, in one first finger 21, the mover 27 moves toward the engager Wa by the spring 29. Accordingly, one first finger 21 is engaged with the engager Wa, and the workpiece W becomes movable together with the first finger 21. Through the foregoing action, the engaging action is finished.

In the subsequent moving action, the first hand H1 further moves in the same direction as in the engaging action. Accordingly, the workpiece W also moves in the same direction together with movement of the first finger 21. That is, the workpiece W is caused to slide and move to a predetermined direction on the placing table S by the first hand H1. Through the foregoing action, the moving action is finished. In this manner, the controller 1200 can cause the workpiece W on the placing table S to slide and move to a predetermined position. Although one of the two first fingers 21 is engaged with the engager Wa of the workpiece W in this example in this example, the present application is not limited to this example, and both of the two first fingers 21 may be engaged with the engager of the workpiece. In this case, the upper surface of the workpiece has engagers individually associated with the two first fingers 21.

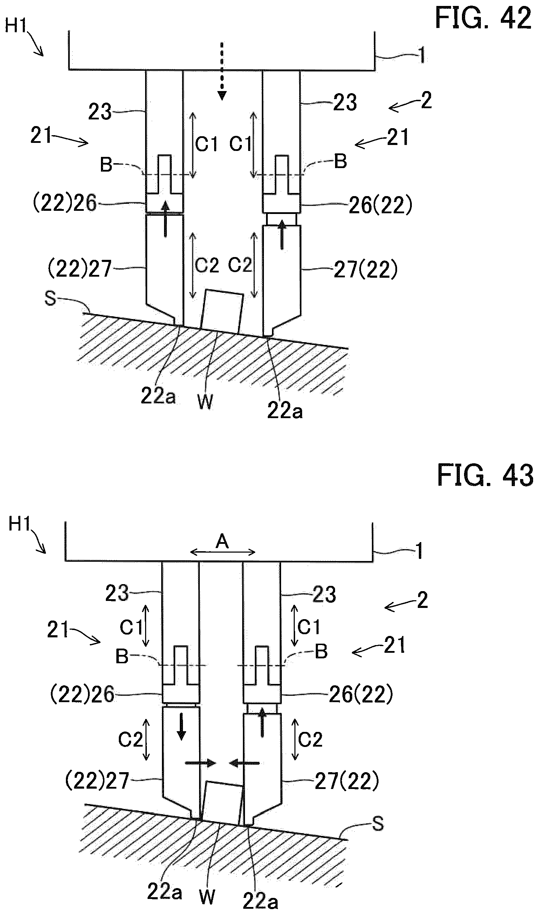

The first hand H1 of this embodiment can grip the workpiece W appropriately even in a case where the placing table S of the workpiece W is tilted. As illustrated in FIG. 42, the robot arm 1110 lowers the first hand H1 and brings the first fingers 21 of the first gripper 2 into contact with the placing table S. At this time, the two first fingers 21 are extended vertically. The two first fingers 21 are disposed side by side in the tilt direction of the placing table S with the workpiece W interposed therebetween. When each of the two first fingers 21 contacts the placing table S, the movers 27 move toward the fixers 26 in the extension directions C2. The amounts of this movement of the movers 27 differ between the two first fingers 21. Specifically, the amount of movement of the mover 27 of one of the first fingers 21 located at a higher level in the tilt direction of the placing table S (hereinafter referred to as a higher first finger 21) is larger than that of the other first finger 21 located at a lower level (hereinafter referred to as a lower first finger 21). In the manner described above, in each of the two first fingers 21, the amount of movement of the mover 27 is adjusted in accordance with the height of the placing table S.

As illustrated in FIG. 43, the two first fingers 21 approach each other in the opening/closing directions A and finally contact the workpiece W. In this manner, the workpiece W is gripped with the two first fingers 21. While the first fingers 21 approach each other, the movers 27 of the first fingers 21 move in the extension directions C2. Specifically, the mover 27 of the higher first finger 21 moves toward the placing table S with movement of the higher first finger 21. The mover 27 of the lower first finger 21 moves toward the fixer 26 with movement of the lower first finger 21. In this manner, since the first fingers 21 include the dampers 25 independently of each other, the movers 27 can follow the tilt surface of the placing table S with movement of the two first fingers 21. Thus, on the tilt placing table S, the two first fingers 21 also slide smoothly and grip the workpiece W appropriately.

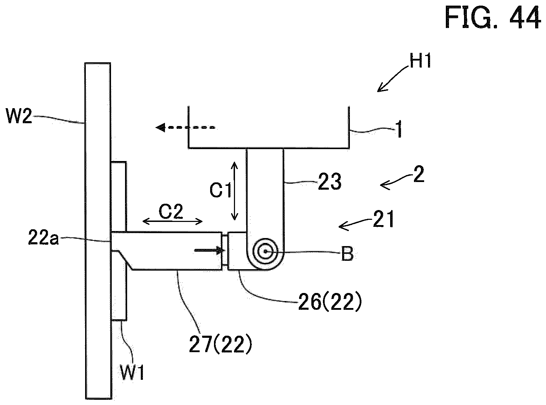

As illustrated in FIG. 44, the first hand H1 of the embodiment described above appropriately absorbs shock exerted on the first fingers 21 even in the case of attaching the workpiece W1 gripped by the first hand H1 to a fixing plate W2 extending vertically. Specifically, first, the first hand H1 causes the first fingers 21 gripping the workpiece W1 in the extended state to bend. Next, the robot arm 1110 moves the first hand H1 and brings the workpiece W1 into contact with the fixing plate W2 (pushes the workpiece W1 against the fixing plate W2). In this example, the distal ends of the first fingers 21 contact the fixing plate W2 together with the workpiece W1 (see FIG. 40). When the workpiece W1 contacts the fixing plate W2, the movers 27 of the first fingers 21 move toward the fixers 26 in the extension directions C2. That is, even when the first fingers 21 bend, the damping directions of the first parts 22 do not change. Accordingly, the damper 25 can absorb shock caused by contact of the workpiece W1 (first fingers 21) with the fixing plate W2. Thus, in this case, the first hand H1 can also be moved quickly to the position of the fixing plate W2, and the position of the fixing plate W2 does not need to be detected accurately. In this manner, since the first parts 22 include the dampers 25, the damping direction can be changed in conformity with the first parts 22. Thus, even in the case described above, shock can be appropriately absorbed.

The hand 100 of the embodiment described above can perform the positioning work of the workpiece similarly even in the absence of the bending actuator 4.

In the embodiment described above, the opening/closing actuators 3 may move the two first fingers 21 in conjunction with each other.

The hand 100 of the embodiment may be incorporated in a device other than the robot 1100.

The hand 100 of the embodiment includes the first hand H1 and the second hand H2, but does not need to include the second hand H2.

Although the damper 25 of the embodiment employs the ball spline 28 using a ball as a roller, the present application is not limited to this example, and a guide using a ball, a roller, or the like may be used as a roller.

## Claims

1. A hand comprising:
a base;
two fingers that extend from the base and are bendable;
an opening/closing actuator that is disposed in the base and moves the two fingers in a predetermined opening/closing direction so that the two fingers grip a workpiece; and
a bending actuator that is disposed in the base and causes the two fingers to bend, wherein
each of the fingers includes a second part extending from the base and a first part coupled to the second part to be rotatable about a rotation axis parallel to the opening/closing direction, the first part being bendable with respect to the second part, and
the first part includes a damper that causes the first part to elastically extend and contract in an extension direction of the first part.

2. The hand according to claim 1, wherein
the opening/closing actuator moves the two fingers independently of each other in the opening/closing direction.

3. The hand according to claim 1, wherein
the bending actuator causes the two fingers gripping the workpiece to bend so that the workpiece is moved to a predetermined delivery position of the workpiece.

4. The hand according to any one of claims 1 to 3, wherein
the first part includes a fixer rotatably coupled to the second part, and a mover coupled to the fixer through the damper, the first part being extended or contracted by movement of the mover in the extension direction, and
the damper includes a guide including a roller that guides the mover to the extension direction by rolling, and an elastic member that elastically presses the mover.

5. A robot comprising: the hand according to any one of claims 1 to 4; and
a robot arm to which the hand is coupled.

6. A robot system comprising:
the hand according to any one of claims 1 to 4; and
a controller that controls the hand, wherein
the controller performs
a pushing action of pushing a distal end of the first part against a surface of a workpiece so that the first part is retracted,
an engaging action of causing the distal end of the first part retracted by the pushing action to slide along the surface of the workpiece to thereby engage the first part with an engager disposed in the workpiece and recessed from the surface of the workpiece, and
a moving action of moving the first part engaged by the engaging action to thereby move the workpiece.

7. A robot system comprising:
a hand including a finger and a damper that causes the finger to extend and contract elastically in an extension direction of the finger; and
a controller that controls the hand, wherein
the controller performs
a pushing action of pushing a distal end of the finger against a surface of a workpiece so that the finger is retracted,
an engaging action of causing a distal end of the finger retracted by the pushing action to slide along the surface of the workpiece to thereby engaging the finger with an engager disposed in the workpiece and recessed from the surface of the workpiece, and
a moving action of moving the finger engaged by the engaging action to thereby move the workpiece.

8. A control method for the hand according to any one of claims 1 to 4, the method comprising:
pushing a distal end of the first part against a surface of a workpiece so that the first part is retracted;
causing the distal end of the retracted first part to slide along the surface of the workpiece to thereby engage the first part with an engager disposed in the workpiece and recessed from the surface of the workpiece; and
moving the first part engaged with the engager to thereby move the workpiece.
